# EUROPEAN PATENT SPECIFICATION

(11) **EP 2 016 786 B1**
(45) Date of publication and mention of the grant of the patent: **13.11.2013**
(21) Application number: 07736244.0
(22) Date of filing: 22.04.2007
(51) Int. Cl.: H04W 84/18, H04L 12/733, H04L 12/721, H04L 12/715

(54) **WIRELESS DATA NETWORK**
DRAHTLOSES DATENNETZWERK
RÉSEAU DE DONNÉES SANS FIL

(30) Priority: 24.04.2006 IL 17514406
(43) Date of publication of application: 21.01.2009
(60) Divisional application: 12001685.2
(73) Proprietor: Elbit Systems Ltd., 31053 Haifa (IL)
(72) Inventor: TEMELMAN, Aviv, 44925 Tsofit (IL); POLYAKOV, Oleg, 55900 Ganei Tikva (IL); KOOJMAN, Yehuda, 52542 Ramat Gan (IL)
(74) Representative: Schuhmann, Albrecht
(86) International application number: PCT/IL2007/000504
(87) International publication number: WO 2007/122620

(56) References cited:
- US-A1- 2004 264 403
- US-B1- 6 791 949
- US-B1- 6 791 949
- US-B1- 6 850 524
- DE RANGO F ET AL: "A scalable routing scheme with group motion support in large and dense wireless ad hoc networks" COMPUTERS & ELECTRICAL ENGINEERING, XX, XX, vol. 32, no. 1-3, 19 April 2006 (2006-04-19), pages 224-240, XP025132042 ISSN: 0045-7906
- CHOO-CHIN TAN ET AL: "Multicasting in mobile backbone based ad hoc wireless networks" WIRELESS COMMUNICATIONS AND NETWORKING CONFERENCE, 2006. WCNC 2006. IE EE LAS VEGAS, NV, USA 3-6 APRIL 2006, PISCATAWAY, NJ, USA,IEEE, PISCATAWAY, NJ, USA, 3 April 2006 (2006-04-03), pages 703-708, XP031387291 ISBN: 9781424402694
- CHAO GUI ET AL: "Scalable multicasting in mobile ad hoc networks" INFOCOM 2004. TWENTY-THIRD ANNUALJOINT CONFERENCE OF THE IEEE COMPUTER AND COMMUNICATIONS SOCIETIES, IEEE, PISCATAWAY, NJ, USA, vol. 3, 7 March 2004 (2004-03-07), pages 2119-2129, XP010740567 ISBN: 9780780383555
- JAIKAEO C ET AL: "Adaptive backbone-based multicast for ad hoc networks" PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol. 5, 28 April 2002 (2002-04-28), pages 3149-3155, XP010590055 ISBN: 9780780374003
- HUEI-JIUN JU ET AL: "Performance analysis and enhancement for backbone based wireless mobile ad hoc networks", BROADBAND NETWORKS, 2005 2ND INTERNATIONAL CONFERENCE ON BOSTON, MA OCT. 3-7, 2005, PISCATAWAY, NJ, USA,IEEE, 3 October 2005 (2005-10-03), pages 789-798, XP010890288, DOI: 10.1109/ICBN.2005.1589679 ISBN: 978-0-7803-9276-2

## Description

### FIELD OF THE DISCLOSED TECHNIQUE

The disclosed technique relates to communications methods, systems and networks in general, and to methods and systems of ad-hoc communications networks in particular.

### BACKGROUND OF THE DISCLOSED TECHNIQUE

Communications networks are known in the art. An ad-hoc network is a network in which the participants in the network, known as nodes, communicate between each other directly or via other nodes (i.e., a node may perform the operation of a router). In ad-hoc networks, Nodes may leave or join the network. Nodes may further be mobile, thus, the topology of the network frequently changes. Consequently, routes, for transmitting messages between nodes, may frequently vary.

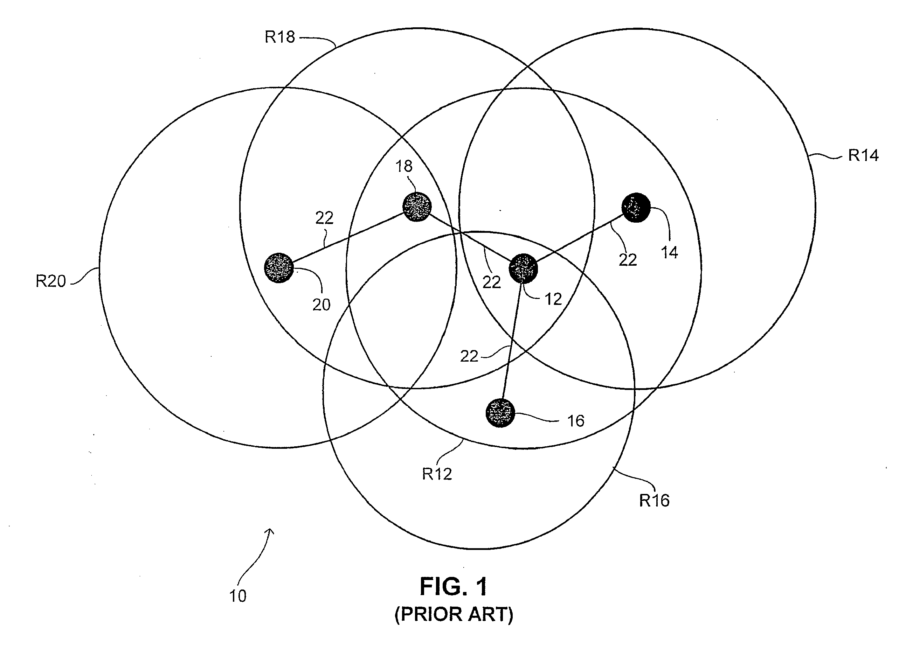

Reference is now made to Figure 1, which is a schematic illustration of a simple exemplary ad-hoc network generally referenced 10. Network 10 includes nodes 12, 14, 16, 18 and 20. Each node has a maximal transmit range indicated by circles R12, R14, R16, R18 and R20. Maximal transmit range may be the maximal radio coverage range of a node. The lines 22, between the two nodes, indicate that the nodes communicate with each other. A one-hop neighbor of a node is another node with which the node communicates directly. A two-hop neighbor of a node is another node with which the node communicates via a third node. For example, Nodes 14, 16 and 18 are the one-hop neighbors of node 12, since they communicate directly with node 12. Node 20 is the two-hop neighbor of node 12 since node 12 communicates with node 20 via node 18. Symmetrically, node 12 is a two-hop neighbor of node 20 since node 12 communicates with node 20 also via node 18.

US Patent 6,304,556 to Haas entitled "Routing and Mobility Management Protocols for Ad-Hoc Networks" directs to a technique in which a system arranges nodes in an ad-hoc network, wherein a node is cognizant of all the nodes in the routing zone of the node. A node directly transmits messages to another node in the routing zone of the transmitting node. The transmitting node is known as the source node and the receiving node is known as the destination node. If the destination node is not in the routing zone of the source node, the source node transmits a route discovery query to peripheral nodes in the routing zone of the source node. A peripheral node will announce itself as part of the route to the destination node if the destination node is within the routing zone of the peripheral node. If the destination node is not in the routing zone of the peripheral node, the peripheral node will forward a route discovery query to another peripheral node in the routing zone of the peripheral node. Thus, a route from a source node to a destination node may be discovered. In order to reduce the number route discovery queries Haas directs to a technique wherein route discovery queries are sent to one or a plurality of nodes known as Mobility Reporting Centers (MRCs). Each MRC has a management zone defined in the same manner as the routing zone. Thus, each node is associated with one or more MRC. The route discovered by the MRCs may be the route for transmitting a message or may indicate the direction in which a node may attempt to discover a better path.

US Patent 6,385,174 to LI entitled "method and apparatus for transmission of node link status messages throughout a network with reduced communication protocol overhead traffic" directs to a technique in which a system, arranges nodes in an ad-hoc network. Each node in the network is a member of a cluster of nodes with one of the nodes designated as a cluster head. Nodes in a cluster communicate with each other while nodes in different clusters communicate via the cluster heads. Each node broadcasts a node status message advertising the presence of the node within the network. Each cluster head maintains a database including information enabling the cluster head to determine a route to a node in another cluster. Each node broadcasts link update messages informing the cluster head of the node and other cluster heads of changes that occurred in the topology. The cluster head neighbors broadcast the update messages to their cluster head neighbors and cluster nodes. Consequently, the databases of each cluster head are synchronized. The system by LI concatenates the status messages and the link update messages to reduce overhead transmissions. A node transmits a message to the cluster head of the node. A cluster head determines the cluster head neighbor a message is forwarded to according to the database in the cluster head.

European patent application publication EP1,324,532A2 to Liu et al., entitled "Method And Apparatus for on Demand Multicast and Unicast" is directed to a technique wherein nodes, in a communications network are arrange in clusters. A node, in a cluster, is selected as a cluster head. The cluster head selects another cluster head as gateway. Each node in the network transmits a beacon status message to one-hop neighbors. The beacon status message includes a unique identification code of the transmitting node and the one-hop neighbors of the node. Consequently, each node maintains a local database of one and of two-hop neighbors. A cluster head stores a cluster head routing table and a gateway stores a gateway routing table.

A message source node may determine the next hop in a route of a message whose destination is a node, at most two-hop from the node, according to the local database. If a node in a cluster cannot locate a destination node, the node forwards the message to the cluster-head. A cluster head attempts to locate the destination node in the local database. If the destination node is not in the local database of the cluster head the cluster head attempts to locate the destination node in a routing table stored in the cluster head. If the destination node is not in the routing table stored in the cluster head routing table, the cluster head forwards the message to a cluster head neighbor one-hop closer to the selected gateway. If eventually the message reaches the gateway and the gateway cannot find the destination node in the gateway routing table, the gateway attempts to discover a route to the destination node.

US Patent 5,974,326 to Sherman entitled "Dynamically Reconfigurable Communication Network and Method", is directed to a technique wherein each node participating in the network is assigned a permanent identification. Each node in the network, stores a prioritized routing list to any other node in the network, according to the number of hops required to reach a destination node. Every node transmitting a message, may attach the routing list of the node to the transmitted message. Therefore, a node acquires or updates the routing list of the node, according to messages received from other nodes. According to another embodiment of the system by Sherman, several different networks referred hereinafter as sub-networks may form a single network. Each sub-network has a central communication node. All of the nodes in a sub-network communicate with each other, and with their central communication node. The central communication node communicates with central communication nodes of other sub-networks. A message, originating at a node in one sub-network, destined to a node in another sub-network, is routed to the central communication node of the sub-network. The central communication node of the network, routes the message to the central communication node of the other sub-network. The central communication node of the other sub-network, further routes that message to the destination node.

The publication to Pei et al. entitled "LANMAR: Landmark Routing for Large Scale Wireless Ah Hoc Networks With Group Mobility" directs to a technique wherein nodes forming a logical group of nodes (e.g., a brigade, a soldiers in a battle field) select a landmark node representing the logical group of nodes. Thus, each node in the network is associated with a landmark. Each node in the network exchange routing information with the nodes in the local area of the node known as the fisheye scope. For example, the fisheye scope of a node may be all the one-hop and two-hop neighbors of the node. The routing information includes routes to the nodes in the local area of the node and routes to the different landmarks in the network. A node sends a message to another node in the fisheye scope of the node according to the routing table stored in the node. A node sends a message to another node, not in the fisheye scope of the node by first directing the message to the landmark of the other node. When the message reaches an intermediate node, and the destination node is within the fisheye scope of the intermediate node, the intermediate node forwards the message directly to the destination node, according to the routing table stored in the intermediate node.

The publication to Krishna et al. entitled "A Cluster-Based Approach for Routing in Dynamic Networks" directs to a technique wherein nodes in a network are arranged in overlapping clusters. Nodes, belonging to more than one cluster are called boundary nodes. Each node maintains a list of neighbors of the node, a list of the clusters in the network, and a list of the boundary nodes of the cluster of the node. The list of clusters is the same in each node. When a change in the topology of the network occurs in a cluster, the boundary node or nodes of that cluster, broadcast their updated list of clusters to neighboring boundary nodes. The neighboring boundary nodes, broadcast in turn, their list of clusters. The non-boundary nodes receive the lists of clusters broadcasts of the boundary nodes and update their list of clusters.

Each node, maintains information about the location of every other node in the network. Each node determines a route to every other node. Each node creates a routing table with entries of the identification representation of the other node. If the other node is not a one-hop neighbor of the node, the routing table includes a respective boundary-node through which a message, destined to the other node, is sent. A node, forwards a message to a destination node, according to the routing table of the node. If the destination node is a one-hop neighbor of the transmitting node, the transmitting node forwards the message directly to the destination node. If the destination node is not a one-hop neighbor of the transmitting node, the transmitting node will forward the message to the respective boundary-node, associated with the destination node, according to the routing table. The boundary-node will transmit the message either directly to the destination node, or to another boundary-node, according to the routing table of the boundary-node.

The publication "Performance Analysis and Enhancement for Backbone Based Wireless Mobile Ad Hoc Networks", XP010890288, discloses an extended Mobile Backbone Network topology synthesis algorithm for constructing and maintaining a dynamic backbone structure in mobile wireless ad hoc networks.

### SUMMARY OF THE PRESENT DISCLOSED TECHNIQUE

It is an object of the disclosed technique to provide a system for a cluster-less communication network which enables communication between mobile nodes according to claims 1-19.

### BRIEF DESCRIPTION OF THE DRAWINGS

The disclosed technique will be understood and appreciated more fully from the following detailed description taken in conjunction with the drawings in which:
Figure 1, is a schematic illustration of a simple exemplary ad-hoc network;
Figures 2A, 2B and 2C are a schematic illustrations of an exemplary network, constructed and operative in accordance with an embodiment of the disclosed technique;
Figure 3, is a schematic illustration of a system, constructed and operative in accordance with another embodiment of the disclosed technique;
Figure 4, is a schematic illustration of a method for operating a node in a wireless and cluster-less network, operative in accordance with a further embodiment of the disclosed technique;
Figure 5, is schematic illustration of a method for updating routing information, when the own role of the node changes, operative in accordance with another embodiment of the disclosed technique;
Figure 6, is a schematic illustration of a method for updating routing information in an ordinary-node, when a node neighbor joins or leaves the one-hop neighborhood of the ordinary-node, operative in accordance with a further embodiment of the disclosed technique;
Figure 7, is a schematic illustration of a method for updating routing information in a super-node, when a node neighbor joins or leaves the one-hop neighborhood of the super-node, operative in accordance with another embodiment of the disclosed technique;
Figure 8, is a schematic illustration of an exemplary network, in accordance with a further embodiment of the disclosed technique;
Figure 9A is a schematic diagram of a network generally reference 500, operative in accordance with another embodiment of the disclosed technique;
Figure 9B is a schematic diagram of a network, operative in accordance with another embodiment of the disclosed technique;
Figure 10, is a schematic illustration of a method for selecting the alternative next hop of a node, operative in accordance with a further embodiment of the disclosed technique;
Figure 11A is a schematic illustration of an exemplary super-node backbone of a network, operative in accordance with another embodiment of the disclosed technique;
Figure 11B is a schematic illustration of the super-node backbone of the sub-network, operative in accordance with another embodiment of the disclosed technique; and
Figure 11C is a schematic illustration of the super-node backbone of the sub-network, operative in accordance with another embodiment of the disclosed technique.

### DETAILED DESCRIPTION OF THE EMBODIMENTS

The disclosed technique overcomes the disadvantages of the prior art by providing a cluster-less communication network and a method and a system there for, which enables communication between mobile nodes wherein some nodes, designated as super-nodes, form the routing backbone of the network and communicate between one another via a dedicated backbone routing link. Each node (i.e., super-node or ordinary-node) forwards packets to one-hop and two-hop neighbors according to a local routing table. An ordinary-node forwards packets to other-node (i.e., more than two-hops) via the super-node backbone. A super-node forwards packets to other nodes (i.e., ordinary-nodes and other super-nodes), according to a network routing table. It is noted that the term packet herein refers to packets of information transit through the network. It is further noted that these packets are forwarded between nodes participating in the network.

In a communication network according to the disclosed technique, each node in the network is a router. Each node may be coupled directly with one or more hosts. Each node may further be coupled with external routers (i.e., routers associated with external networks). These external routers provide routing services to these external networks. Each node provides routing services to hosts coupled directly to the node, or to the external routers coupled therewith. Each node transmits a node status message, which is received by one-hop neighbors of the node. Node status messages will be referred to hereinafter as "hello messages". A hello message includes the node identification representation (e.g., MAC ID number) of the transmitting node, the role of the node (i.e., ordinary-node or super-node), and a list of the one-hop neighbors of the transmitting node and the role of each of these one-hop neighbors. Accordingly, each node receives hello messages from one-hop neighbors and these hello messages include information about two-hop neighbors of the receiving node (i.e., nodes which can be accessed via the one-hop neighbor nodes). Consequently, a node acquires information about the identification and the role of one-hop neighbors and two-hop neighbors thereof, and forms a local topology database, based on that information. It is noted that the term message or messages refers to messages containing information relating to the construction and maintenance of the network. It is further noted that these messages are transmitted between nodes.

Each node in the network store at least one routing table. This routing table includes the next node in a path to a destination node (i.e., the nodes a packet traverses from the packet source node to the packet destination node). Every destination node may have several path listed. Associated with each destination node, listed in the routing table, is the cost of the path to that destination node. The cost of a path is the sum of the cost of each hop in the route to the destination node. The cost of a path may be, for example, the total number of hops in the path to the destination node. The cost of a path may further be, for example, the sum of metrics, measuring the quality of a link between two neighboring nodes and the work load (e.g., number of one-hop neighbors) of each node. A packet source node will attempt to forward a packet to a destination node, via the path with the lowest cost associated therewith.

Each ordinary-node (i.e., a node that is not a super node) forms a two-hop local routing table. This local routing table includes information relating to every node, which is no more than two-hops away (i.e., one-hop neighbors and two-hop neighbors). The local routing table includes entries of the one-hop neighbors and of the hosts, and external routers coupling external networks, coupled with the one-hop neighbor, to which packets are forwarded. Information associated with the routing table entries may include the unique network identification representation (e.g., IP address) assigned to each node, to each host or to each external router coupling an external network. The local routing table further includes entries of the two-hop neighbors, with the respective one-hop neighbors (i.e., there may be one or more than one one-hop neighbor which can relay packets from a specific source node to a specific destination node), and their unique routing identification representations. It is noted that the local routing table may further include entries of hosts and of routers coupling external networks, coupled with a two-hop neighbor. The routing identification representations of the nodes in local routing table are derived from the hello messages sent by each node. The routing identification representations are derived from the node identification representation since there is a one-to-one correspondence between them. The routing identification representations of the hosts, coupled with the node, are obtained according to a routing protocol (e.g., RIP).

When the destination of a packet is a one-hop node neighbor, or a host coupled with a one-hop node neighbor (i.e., directly of via an external router coupling an external network) of the packet source node, the packet source node transmits the packet directly to the one-hop neighbor. When the destination is a two-hop node neighbor, the packet source node transmits the packet to a relaying one-hop neighbor, which communicates with the destination node, according to the local routing table. In turn, the relaying neighbor forwards the packet to the relevant node.

Packets, destined to nodes which are more a neighbor limiting criterion away from the packet source node, are routed via a one-hop super-node neighbor of the packet source node. Packets, destined to hosts coupled with a node more than a neighbor limiting criterion from the packet source node, are also routed via a one-hop super-node neighbor. The route, from a source node to a destination may be different for each packet. The neighbor limiting criterion is for example the hop number of node neighbors from the pertinent node. The neighbor limiting criterion may further be the distance form the pertinent node. Each node may dynamically determine the neighbor limiting criterion thereof (e.g., each node may dynamically determine the number of hop neighbors thereof or the distance there from). The example of two-hop neighbors, as the neighbor limiting criterion is used hereinafter.

A super-node is a node with capabilities to direct packets to every node in the network, or hosts couple with the node (i.e., directly or via an external router coupling an external network). A super-node, stores a local routing table, including entries of the one-hop and two-hop neighbors. That is, the local routing table includes entries to one-hop and two-hop ordinary-node neighbors, one-hop and two-hop super-node neighbors, and hosts and routers coupling external networks, coupled with one-hop neighbors. Each entry includes information of the unique network identification representation assigned to each node, to each host, or to each external router of an external network coupled with the one-hop ordinary-node neighbor. A super-node, further stores a network routing table. This network routing table includes entries to all the nodes, the hosts and external networks, with the respective one-hop super-node neighbor or neighbors, to which the super-node forwards a packet destined to these nodes, hosts, or networks. Each entry includes information of the unique routing identification representation.

A super-node, receiving the packet, determines if the packet is destined to the receiving super-node or hosts coupled with the receiving super-node (i.e., directly of via an external router coupling an external network). The receiving super-node further determines if the packet is destined to a one-hop ordinary-node neighbor, or a host coupled with the ordinary-node neighbor. When the packet is destined to a one-hop and two-hop node neighbor, or a host coupled with that node neighbor, the super-node forwards the packet according to the local routing table of that super-node. When the packet is destined to a node or a host more than two-hops away from the super-node, the super-node forwards the packet to the next super-node neighbor according to the network routing table. It is noted that a node (i.e., an ordinary-node or a super-node) prefers to forward a packet according to the local routing table rather than over the super-node backbone when possible.

Each two super-nodes communicate between one another via a dedicated backbone routing link. A recently promoted super-node establishes a dedicated backbone routing link (e.g., by a Point to Point Protocol) with each of the one-hop super-node neighbors of that super-node. A new super-node request, and receives, from a selected one hop super-node neighbor, the topology information of the network, stored in that selected one-hop super-node neighbor. Thus, each super-node creates a network topology database according to the network topology information. Super-nodes may exchange network topology information according to a link state protocol (e.g., OSPF). Super-nodes synchronize their network topology databases, and maintain this synchronization by exchanging network topology update messages, with other one-hop super-node neighbors. These network topology update messages inform of changes in the topology of the one-hop neighborhood of the super-node from which this message originated (e.g., an ordinary-node left the one-hop neighborhood of the super-node). It is noted that a super-node may exchange network topology update messages not originated there from. Thus, network topology update information propagates (i.e., flooded) through the super-node backbone, and the super-nodes maintain their network topology databases synchronized. Each super-node constructs and maintains a network routing table according to the network topology database.

In the system according to the disclosed technique, a node is a router to hosts coupled with that node (i.e., directly or via an external router of an external network). For example, a route to a host coupled with a node, stored in a routing table (i.e., local routing table or network routing table) of a one-hop neighbor, is associated with that node. The node informs the one-hop neighbors, of routes to the hosts coupled to the node (i.e., either coupled directly or via an external router coupling an external network) by transmitting host routing information messages. An ordinary-node transmits these host routing information messages according to a routing protocol (e.g., RIP). A super-node transmits host routing information messages, informing one-hop neighbors of routes to hosts couple with the super-node, according to the same routing protocol. A super-node transmits network topology update messages, informing a one-hop super-node neighbors of changes to hosts couple with the node over the dedicated backbone routing link, according to the protocol by which super-nodes exchange network topology information (i.e., the link state protocol).

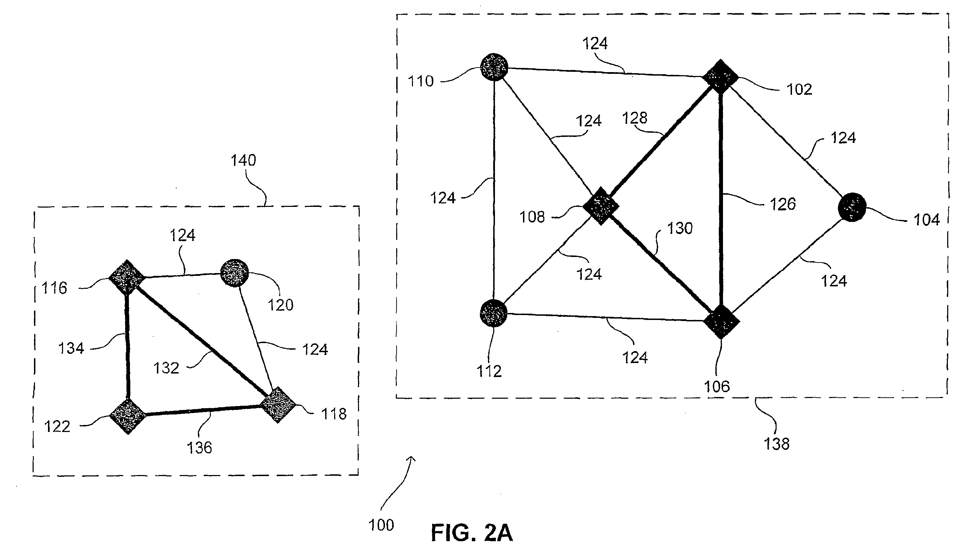

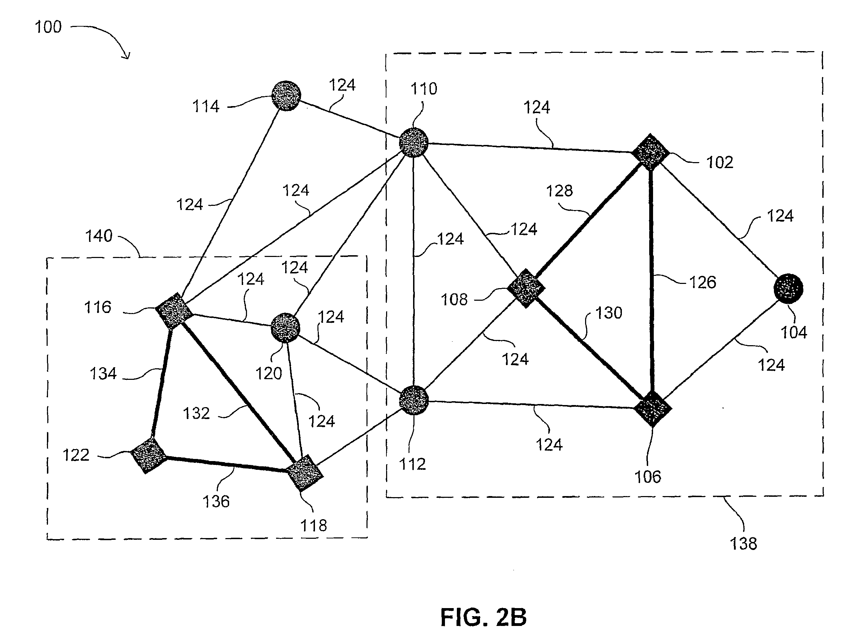

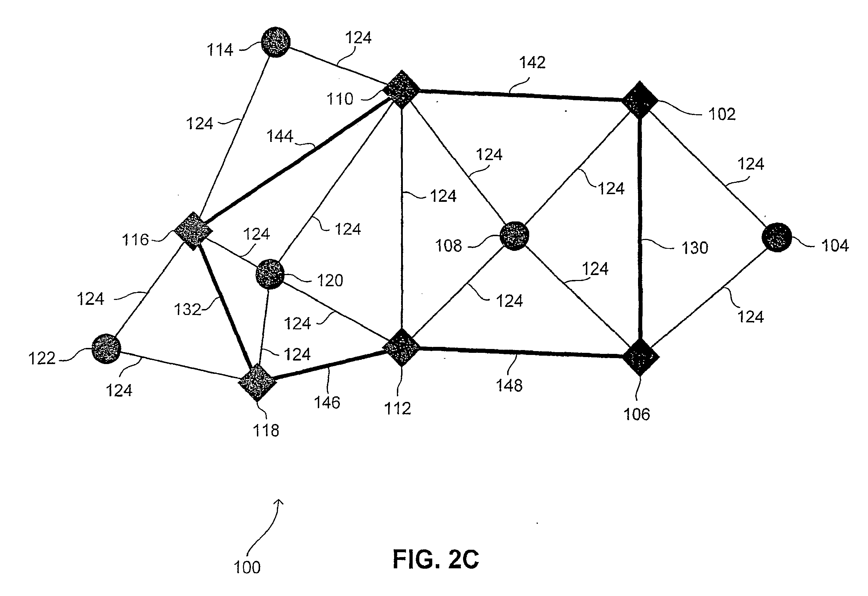

According to the disclosed technique, an ordinary-node attempts to have at least a minimal one-hop local super-node number (i.e., a minimum number of one-hop super-node neighbors). A super-node should have at least a minimal one-hop backbone super-node number (i.e. a minimum number of one-hop super-node neighbors). The minimal one-hop local super-node number and the minimal one-hop backbone super-node number may be predetermined or change dynamically. An ordinary-node in the network may change its role to super-node or designate other one-hop ordinary-node neighbors as super-nodes. A Super-node is designated according to a static criterion (e.g., node ID number), a weighted criterion (e.g., weighted connectivity and coverage), or a combination thereof. An ordinary-node changes it role to a super-node if the ordinary-node is an articulation node. An articulation node will be further explained in conjunction with Figures 2A, 2B and 2C. A super-node may change its role to an ordinary-node if the super-node identifies self-redundancy. Self-redundancy is further explained in conjunction with Figure 2B.

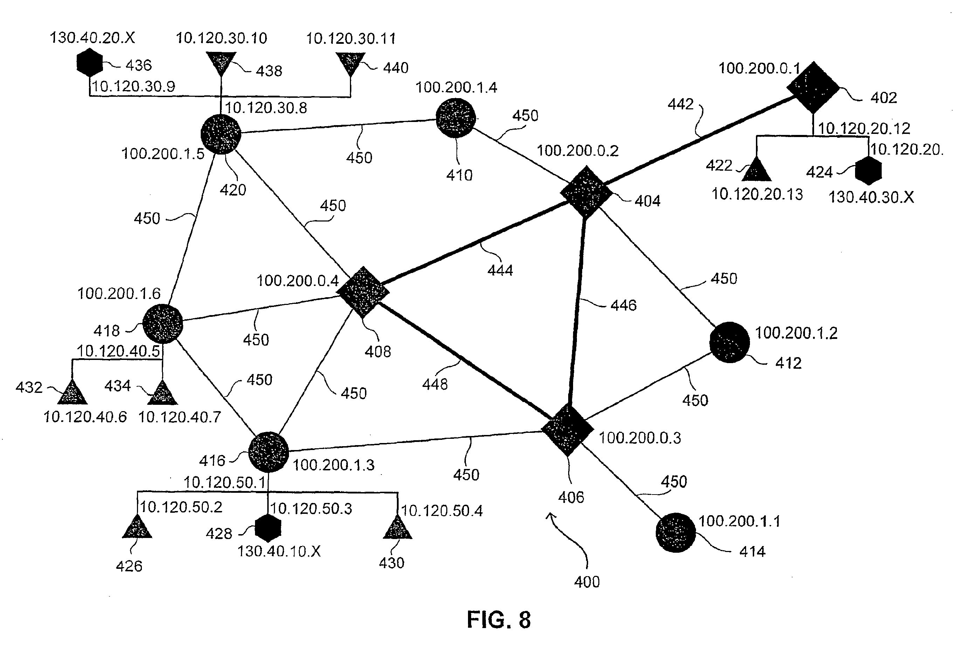

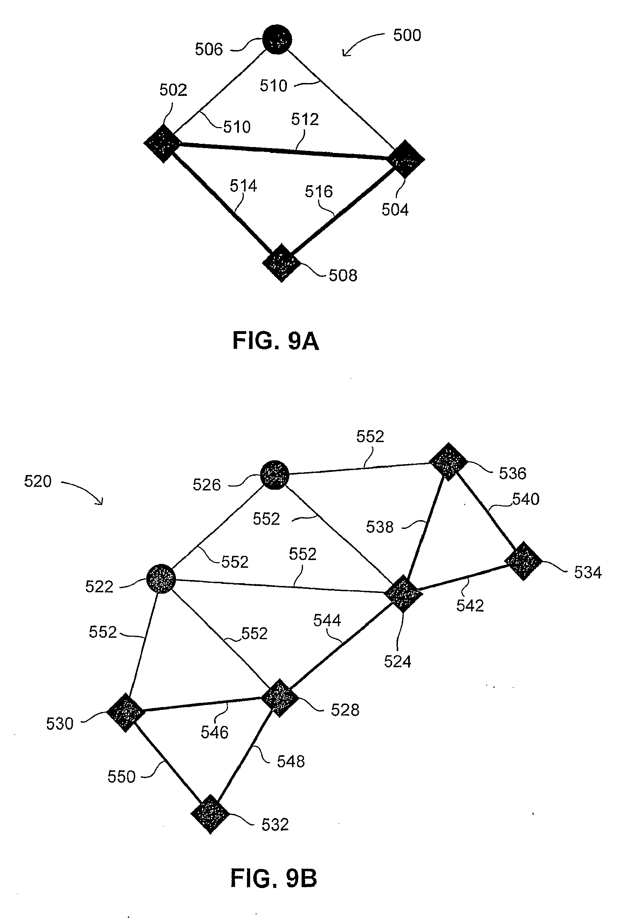

During the forwarding of a packet, between the packet source node to the packet destination node, each intermediate node determines the next hop in the route to the destination of that packet, according to the pertinent routing table (i.e., local routing table or network routing table). This next hop is referred to herein as the primary next hop. However, the link between the current node (i.e., the last node to receive the packet or the packet source node) and the primary next hop may be inoperative (i.e., either temporarily or permanently). Moreover, the primary next hop may be incapable of relaying the packet. If such events occur, the current node transmits the packet to an alternative next hop. Using the alternative next hop increases packet delivery reliability. The concept of the alternative next hop is explained in conjunction with Figures 8A, 8B and 9.

Reference is now made to Figure 2A which is a schematic illustration of an exemplary network generally referenced 100, constructed and operative in accordance with an embodiment of the disclosed technique. Network 100 includes sub-network 138 and sub-network 140. sub-network 138 includes super-nodes 102, 106, 108 and ordinary-nodes 104, 110, 112. Sub-network 140 includes super-nodes 116, 118 and 122 and ordinary-node 120. Super-nodes 102, 106 and 108 form the backbone of sub-network 138. Super-nodes 116, 118 and 122 form the backbone of the sub-network 140. Each of lines 124 represents a one-hop communication link between two ordinary-nodes and between an ordinary-node and a super-node. Each of the bold lines 126, 128, 130, 132, 134, and 136 indicate a dedicated routing backbone link between super-nodes 102 and 106, 102 and 108, 106 and 108, 116 and 118, 116 and 122, 118 and 122 respectively. In network 100, it is desired that each ordinary-node should have at least two one-hop super-node neighbors and each super-node should have at least two one-hop super-node neighbors. That is, the one-hop local super-node number and the one-hop backbone super-node number are equal to two.

Reference is now made to Figure 2B, which is a schematic illustration of an exemplary network generally referenced 100, constructed and operative in accordance with an embodiment of the disclosed technique. In network 100, node 114 joined the network and is now a one-hop neighbor of nodes 110 and 116. In Figure 2B, sub-network 140 has moved toward sub-network 138. Node 116 is now a one-hop neighbor of nodes 110 and 114 as well. Node 118 is now a one-hop neighbor of nodes 112 as well. Node 120 is now a one-hop neighbor of nodes 110, 112, 116 and 118. Node 110 acquires an articulation node status and consequently, changes its role to super-node. An articulation node is a node that has at least the predetermined number of one-hop super-node neighbors, and not all one-hop super-node neighbors are vertices of a continuous connectivity graph (i.e., communicate with each other according to the local topology database of the node) or not all the one-hop ordinary-node neighbors are one-hop away from the continuous connectivity graph of super-nodes. Accordingly ordinary-node 112 acquired an articulation node status as well.

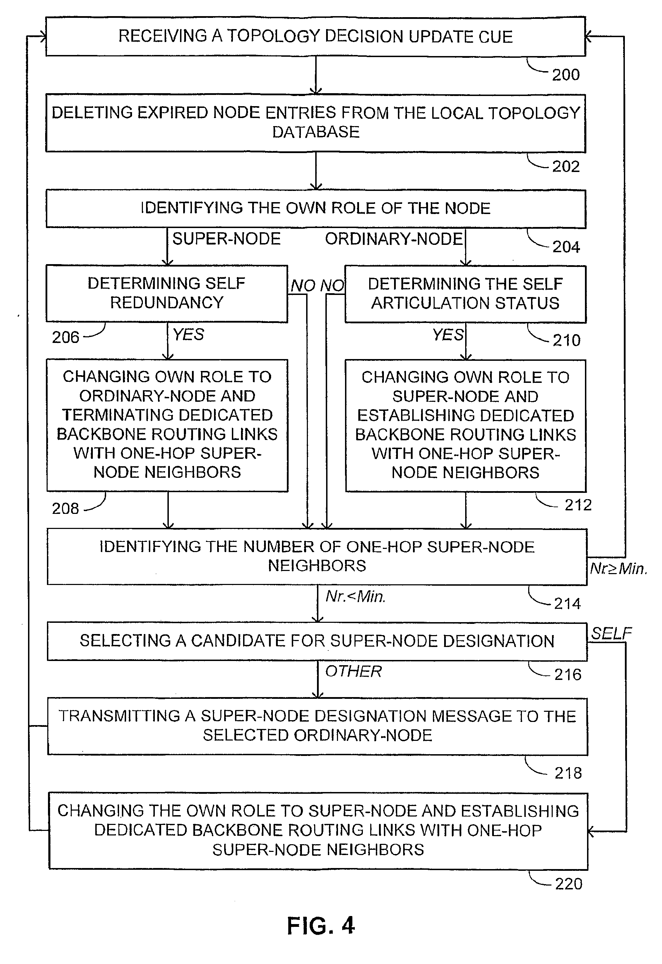

Reference is now made to Figure 2C, which is a schematic illustration of an exemplary network generally referenced 100, constructed and operative in accordance with an embodiment of the disclosed technique. In network 100, node 110 changed its role to a super-node due to the articulation node status of node 110. Alternatively, ordinary-node 114 designated node 110 as a super-node, thus, ordinary-node 114 has two one-hop super-node neighbors. Super-node 110 forms a dedicated backbone routing link 142 with super-node 102 and a dedicated backbone routing link with 144 with super-node 116. Super-nodes 108 and 122 became redundant super-nodes and change their role to ordinary-nodes. Super-node redundancy is further explained in conjunction with Figure 4. Ordinary-node 112 promotes itself to the role of super-node since node 112 is an articulation node and forms dedicated backbone routing links 146 and 148 with super-node 118 and 106 respectively. In network 100, a packet, destined to nodes more than two-hops away from the source node, may be routed via two or more super-nodes. For example, node 104 may forward a message to node 112 either via super-nodes 102 and 110 or via super-node 106.

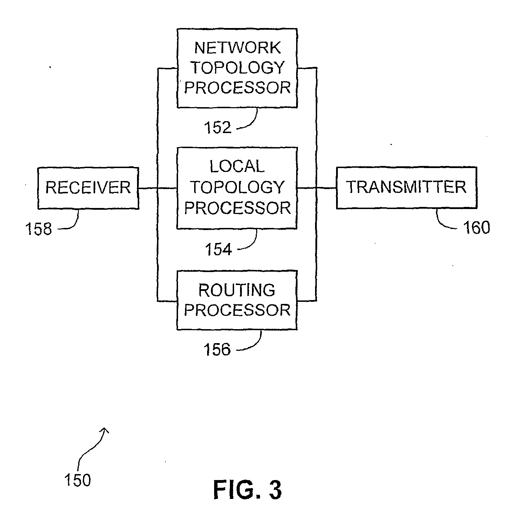

Reference is now made to Figure 3, which is a schematic illustration of a system 150, constructed and operative in accordance with another embodiment of the disclosed technique. System 150 includes network topology processor 152, local topology processor 154, routing processor 156, receiver 158 and transmitter 160. Local topology processor 154 is coupled with network topology processor 152, routing processor 156, receiver 158 and transmitter 160. Network topology processor 152 is further coupled with routing processor 156, receiver 158 and transmitted 160. Routing processor 156 is further coupled with receiver 158 and transmitted 160.

Network topology processor 152 is operative when the node is a super-node. Network topology processor 152 maintains the network topology database, and establishes and terminates dedicated backbone routing links. Network topology processor 152 provides transmitter 160 with network topology database requests, with network topology update message, with network topology database when a network topology database request is received from another super-node and with the local topology database when the node changes its role to a super-node. Network topology processor 152 further provides routing processor 156 with the network topology database.

Local topology processor 154 is operative when the node is a super-node and when the node is an ordinary-node. Local topology processor 154 maintains the local topology database of the node and determines if a change in the role of the node (i.e., from ordinary-node to super-node or vice versa) or if a change in the role of a one-hop ordinary-node neighbor is necessary. Local topology processor 154 further provides the local topology database to network topology processor 152 when the role of the node changes to super-node and to routing processor 156. Local topology processor 154 further provides transmitter 160 with periodic hello messages, and with super-node designation messages (i.e., message that cause a change in the role of a one-hop ordinary-node neighbor) when such a message is required.

Routing processor 156 is operative when the node is an ordinary-node and when the node is a super-node. When the node is an ordinary-node, routing processor 156 constructs and maintains a local routing table according to the local topology database and provides transmitter 160 with host routing information messages informing of hosts and external routers coupled with the node. When the node is a super-node, routing processor 156 further constructs and maintains the network routing table according to the network topology database.

Receiver 158 receives hello messages from one-hop neighbors of the node and provides the received hello messages to local topology processor 156. While system 150 is an ordinary-node, receiver 158 is further operative to receive host routing information messages and provide the received messages to local topology processor 154. When system 150 is a super-node, receiver 158 is further operative to receive network topology database requests, network topology databases, network topology update messages provide them to network topology processor 152.

In the network according to the disclosed technique, the ability of a node to communicate with other nodes may dynamically change. This change may be due to nodes joining or leaving the network. Alternatively, this change may further be due to the movement of nodes relative to each other. Therefore, each node constructs and maintains a local topology database. This local topology database stores the local connectivity information of each node (i.e., connectivity with at most two-hop neighbors of each node). This local connectivity information is update according to received hello message received from other nodes. Each hello message includes the identification representation of the transmitting node, the role of the transmitting node (i.e., super-node or ordinary-node) and the one-hop neighbors of the transmitting node. According to another embodiment, when the number of one-hop neighbors of a transmitting node is large, the transmitting node may send a hello message including a partial list of the one-hop neighbors of the transmitting node. This hello message is referred to herein as a slim hello message. The number of neighbors listed in the slim hello message may be constant or dynamically determined. The transmitting node may further include in the slim hello message only the list the one-hop super-node neighbors of the transmitting node. A node transmits a series of slim hellos followed by a hello message. The number of slim hellos transmitted prior to a hello message is configurable.

Each node, changes its role according to the local topology of that node. An ordinary-node changes its role to a super-node when the articulation node status of the node is positive or when that node receives a super-node designation message. A super-node changes its role to ordinary-node when that super-node detects self redundancy. Furthermore, each node may send a super-node designation message to a one-hop ordinary-node neighbor. A node decides to update the local topology thereof (i.e., change its own role or send a super-node designation message), when a hello message is received from another node. However, when the number of one-hop neighbors of the node is large, the number of received hello messages is very large as well. This may cause the work load of the node to be very large and the network to be unstable (i.e., nodes may frequently change their role). Therefore a node may decide to update the local topology thereof according to a decision update cue.

Reference is now made to Figure 4, which is a schematic illustration of a method for operating a node in a wireless and cluster-less network, operative in accordance with a further embodiment of the disclosed technique. In Figure 4, "*Nr*." denotes the number of super-node neighbors, "≥" denotes "at least" and "<" denotes "smaller than", *X*₁ denotes the minimal one-hop local super-node number and *X*₂ denotes the minimal one-hop backbone super-node number.. Further in Figure 4, the term "*Min*." refers either to *X*₁ or to *X*₂, according the context, the term "self" refers the node executing the method and the term "other" refers to nodes other than the node executing the method.

In procedure 200, a topology decision update cue is received. This topology decision update cue may be, for example, a hello messages received from other nodes. The topology decision update cue may further be an internal flag raised every configurable time period (i.e., topology decisions are performed periodically). This configurable time period may be predetermined. Alternatively, the configurable time period may further be dynamically determined according to the number of one-hop node neighbors of the node. With reference to Figure 3, local topology processor 154 awaits a topology update decision queue.

In Procedure 202, the local topology database of the receiving node is updated according to the received hello message. With reference to Figure 3, local topology processor 154 updates the local topology database. After the completion of procedure 202, the method proceeds to procedure 204. When the node is an ordinary-node, the method further proceeds to procedure 218.

In procedure 202, expired node entries are deleted from the local topology database. Node entries are rendered expired, when a hello message has not been received there from, during a predetermined interval. With reference to Figure 3, local topology processor 154 deletes expired node entries.

In procedure 204, the own role of the node is identified. When the node is a super-node, then, the method proceeds to procedure 206. When the node is an ordinary-node, then, the method proceeds to procedure 210. With reference to Figure 3, local topology processor 154 identifies the role of the node.

In procedure 206, the self redundancy of the receiving node is determined. The system according to the disclosed technique, aims to minimize the number of super-nodes, taking into account certain networking constraints (e.g., robustness). Therefore, each super-node tries to identify self-redundancy. A super-node is considered redundant if all of the following occurs:
- the minimal one-hop backbone super-node number, *X*₂, is still met, if that potentially redundant super-node was demoted to an ordinary-node, for all of the one-hop super-node neighbors of the potentially redundant super-node;
- the minimal local super-node neighbor number, *X*₁, is still met, if that potentially redundant super-node was demoted to an ordinary-node, for all of the one-hop ordinary-node neighbors;
- if the role of that super-node changes to ordinary-node, that node will not exhibit an articulation node status.

When self redundancy is determined, then, the method proceeds to procedure 208. When self redundancy is determined negative, then, the method returns to procedure 214. With reference to Figure 3, local topology processor 154 detects self-redundancy of the node and changes the role of the receiving node to an ordinary-node when self-redundancy is detected.

In procedure 208, the role of the node is changed to an ordinary-node and dedicated backbone routing links, with one-hop super-node neighbors, are terminated. With reference to Figure 3, local topology processor 154 changes the role of the node to ordinary-node and terminates dedicated backbone routing links with one-hop super-node neighbors. After the completion of procedure 208, the method proceeds to procedures 214.

In procedure 210, self-articulation status is detected. Self articulation status is determined according to either one of the following criteria:
- A node that at least one of the one-hop super-node neighbors thereof, are not vertices of a continuous connectivity graph (i.e., communicate with each other according to the local topology database);
- Not all the one-hop ordinary-node neighbors are one-hop away from the continuous connectivity graph of super-nodes;

When the self-articulation status of the node is positive, then, the method proceeds to procedure 212. When the self-articulation status of the node is negative, then, the method proceeds to procedure 214. With reference to Figure 3, local topology processor 154 determines the self-articulation status of the node.

In procedure 212, the role of the node is changed to a super-node and dedicated backbone routing links are established with one-hop super-node neighbors. With reference to Figure 3, local topology processor 154 changes the role of the node to super-node and establishes dedicated backbone routing links with one-hop super-node neighbors. After the completion of procedure 212, the method proceeds to procedures 214.

In procedure 214, the number of one-hop super-node neighbors of the current node is identified. Each ordinary-node should have a minimal one-hop local super-node number, *X*₁, of one-hop super-node neighbors. Each super-node should have a minimal one-hop backbone super-node number, *X*₂, of one-hop super-node neighbors. When the number of one-hop super-node neighbors, is at least *X*₁ when the node is an ordinary-node, or at least *X*₂ when the node is a super-node, then, the method returns to procedure 200. When the number of one-hop super-node neighbors is either smaller than *X*₁ when the node is an ordinary-node or smaller than *X*₂ when the node is a super-node, then, the method proceeds to procedure 216. With reference to Figure 3, local topology processor 154 identifies the number of one-hop super-node number of the receiving node.

In procedure 216, a candidate for super-node designation, is selected. When the role of the node is a super-node, the node selects a one-hop ordinary-node neighbor for super-node designation. When the role of the node is ordinary-node, the node may select itself for super-node designation as well. A node (i.e., a super-node or an ordinary-node) may designate it self or another ordinary-node as a super-node according to, a static priority criterion (e.g., identification representation), a weighted criterion, or a combination thereof. According to the static priority criterion the system selects the node with the highest static priority (e.g., lowest or the highest identification representation). According to the weighted criteria, the node calculates a certain value for each node. The node designates the node with the highest value as a super-node. For example, the value may be the sum of the weighted connectivity (i.e. the measured power of received transmissions) and the weighted coverage of the node. When the role of the node is ordinary-node and the node selected itself for super-node designation, then, the method proceeds to procedure 220. When the node (i.e., either an ordinary-node or a super-node) selected a one-hop ordinary-node neighbor for super-node designation, the method proceeds to procedure 218. With reference to Figure 3, local topology processor 154 selects an ordinary-node for super-node designation.

In procedure 218, a super-node designation message is transmitted to the selected ordinary-node. With reference to Figure 3, local topology processor 154 transmits via transmitter 160 a super-node designation message to the selected ordinary-node. After the completion of procedure 210 the method proceeds to procedure 226. After the completion of procedure 218, the method returns to procedure 200.

In procedure 220, the role of the node is changed to a super-node and dedicated backbone routing links, with one-hop super-node neighbors, are established. With reference to Figure 3, local topology processor 154 changes the role of the node to super-node and establishes dedicated backbone routing links with one-hop super-node neighbors. After the completion of procedure 220, the method proceeds to procedures 200.

It is noted that an ordinary-node, may change its role to super-node when that ordinary-node receives a super-node designation. This change in role is independent of the topology decision update queue.

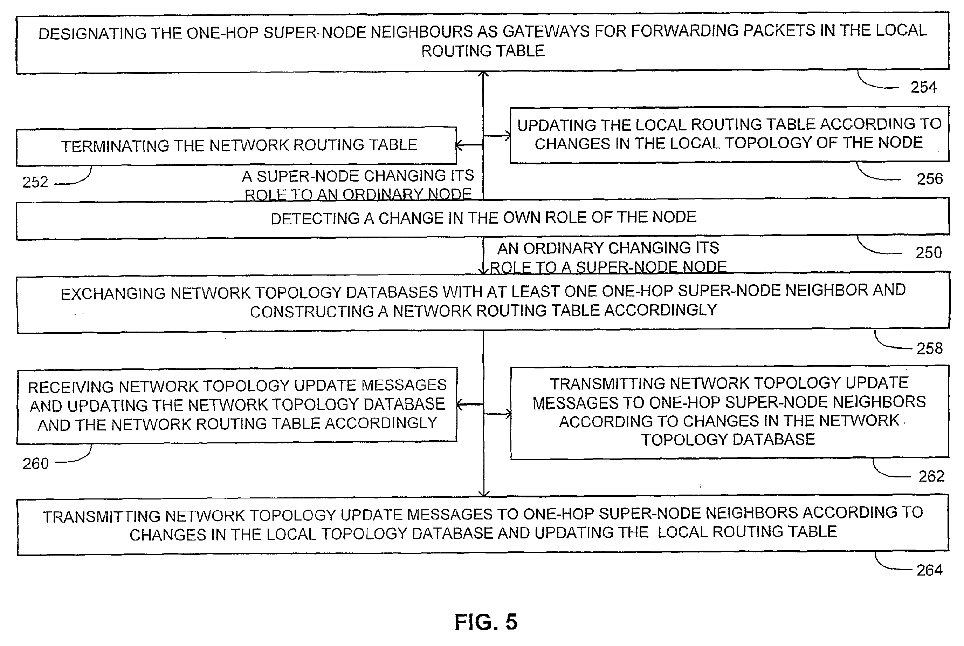

Reference is now made to Figure 5, which is schematic illustration of a method for updating routing information, when the own role of the node changes, operative in accordance with another embodiment of the disclosed technique. In procedure 250, a change in the own role of the node is identified. An ordinary-node may change its role to a super-node and a super-node may change its role to an ordinary-node. When a super-node changes its role to an ordinary-node, then the method proceeds to procedures 252, 254, 256. When an ordinary-node changes its role to a super-node, then the method proceeds to procedures 258. With reference to Figure 3, local topology processor 154 detects the change of the own role of the receiving node.

In procedure 252, the backbone routing table is terminated. An ordinary-node forwards packets only according to a local routing table stored therein. With reference to Figure 3, routing processor 156 terminates the backbone routing table.

In procedure 254, the one-hop super-node neighbors are designated as gateways for forwarding packets in the local routing table. Ordinary-node forwards packets to other nodes more than two hops away via any of the one-hop super-node neighbors thereof. With reference to Figure 3, routing processor 156 designates one-hop super-node neighbors as gateways.

In procedure 256, the local routing table is updated according to changes in the local topology of the node (i.e., changes in the two-hop neighborhood of the node). With reference to Figure 3, routing processor 156 updates the local routing table according to the changes in the local topology of the node.

In procedure 258, a network topology database is exchanged with at least one one-hop super-node neighbor and a network routing table is constructed accordingly. When a node changes its role to a super-node, it requests and receives a network topology database from at least one selected one-hop super-node neighbors of the node. Consequently, the new super-node is cognizant of the topology of the network, and can calculate and construct a network routing table, with entries to every node in the network and host coupled with those nodes (i.e., either directly or via an external router coupling an external network). With reference to Figure 3, network topology processor 152 exchanges network topology databases with one-hop super-node neighbor and routing processor 156 constructs a network routing table. After the completion of procedure 258, the method proceeds to procedure 260, 262 and 264.

In procedure 260, network topology update messages are received, and the network topology database and the network routing table are updated accordingly. The network topology database of the super-node, and consequently the network routing table, is updated by flooding network topology update messages informing of changes in the topology of the network. Each super-node sends topology update messages of changes in the topology in the one-hop neighborhood of the super-node (e.g., a node changed its role, a node joined or left the local neighborhood of the super-node or a node changed its connectivity state with other nodes). With reference to Figure 3, network topology processor 152 receives network topology update messages and updates the network topology database. Routing processor 156 updates the network routing table.

In procedure 262, network topology update messages are transmitted to one-hop super-node neighbors, according to changes in the network topology database. With reference to Figure 3, network topology processor 152 transmits network topology update messages.

In procedure 264, network topology update messages are transmitted to one-hop super-node neighbors, according to changes in the local topology database and the local routing table is updated. With reference to Figure 3, network topology processor 152 transmits network topology update messages. Routing processor 156 updates the local routing table.

One-hop neighbors of an ordinary-node may join or leave the network or the one-hop neighborhood of the ordinary-node. Therefore, the routing information and role of the ordinary-node may change when such an event occurs.

Alternatively, the role of a one-hop neighbor of the ordinary-node may change. This change of role is considered a combination of two simultaneous events. The first event is the leaving of a node of one role, and the second event being the simultaneous joining of a node of the other role. The local topology database and the local routing table are maintained during the change of roles. For example, the change of role of a one-hope node neighbor, from ordinary-node to a super-node, is considered as an event of an ordinary-node leaving and the simultaneous event of a super-node joining the one-hop neighborhood.

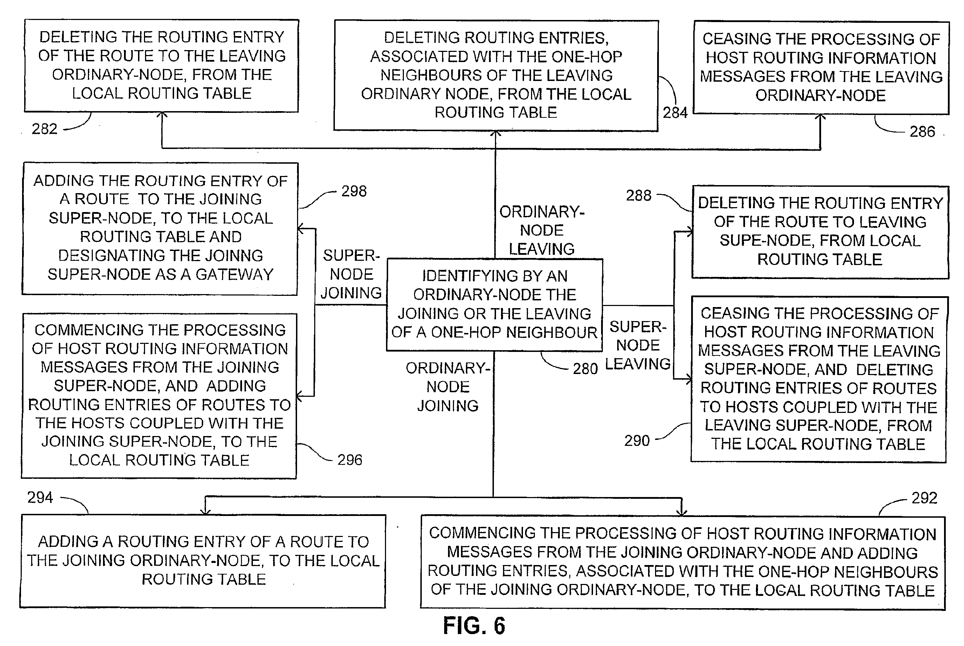

Reference is now made to Figure 6, which is a schematic illustration of a method for updating routing information in an ordinary-node, when a node neighbor joins or leaves the one-hop neighborhood of the ordinary-node, operative in accordance with a further embodiment of the disclosed technique. In procedure 280, the joining or leaving of one-hop neighbor is identified by an ordinary-node. A node is identified as leaving, when hello messages of that node are not received within a configurable time period. When a one-hop ordinary-node neighbor leaves the one-hop neighborhood of the ordinary-node, the method proceeds to procedure 282, 284 and 286. When a one-hop super-node neighbor leaves the one-hop neighborhood of the ordinary-node, the method proceeds to procedure 288 and 290. A node is identified as joining, when the first hello message there from is received. When an ordinary-node becomes a one-hop neighbor of the ordinary-node, then the method proceeds to procedure 292, 294. When a super-node neighbor becomes a one-hop neighbor of the ordinary-node, then the method proceeds to procedure 296 and 298. With reference to Figure 3, local topology processor 154 identifies if a one-hop neighbor joined or left the one-hop neighborhood of the ordinary-node.

In procedure 282, the routing entry of the route to the leaving ordinary-node, is deleted from the local routing table. With reference to Figure 3, routing processor 156 deletes the routing entry of the route to the leaving ordinary-node, from the local routing table.

In procedure 284, the routing entries, associated with the one-hop neighbors of the leaving ordinary-node, are deleted from the local routing table. These routing entries, associated with the one-hop neighbors of the leaving ordinary-node, are the routes to hosts coupled with this leaving ordinary-node. These routing entries are further routes to the two-hop neighbors of the leaving ordinary-node. With reference to Figure 3, routing processor 156 deletes the routing entries associated with the one-hop neighbors of the leaving ordinary-node, from the local routing table.

In procedure 286, the processing of host routing information messages from the leaving ordinary-node, is ceased. Since the leaving ordinary-node is no longer a one-hop neighbor, packets to hosts coupled therewith (i.e., either directly of via an external router coupling an external network) can no longer be routed via the leaving ordinary-node. With reference to Figure 3, routing processor 156 ceases to process host routing information messages from the leaving ordinary-node and the corresponding routing entries, in the local routing table.

In procedure 288, the routing entry, of the route to the leaving super-node, is deleted from the local routing table. With reference to Figure 3, routing processor 156 deletes the routing entries, associated with the leaving super-node from the local routing table.

In procedure 290, the processing of host routing information messages from the leaving super-node, is ceased, and the routing entries of routes to hosts coupled with the leaving super-node, are deleted from the local routing table. Since the leaving super-node is no longer a one-hop neighbor, packets to hosts coupled therewith can no longer be routed via the leaving super-node. With reference to Figure 3, routing processor 156 ceases to process host routing information messages from the leaving super-node. Routing processor 156 further deletes the routing entries, of routes to hosts coupled with the leaving super-node, from the local routing table.

In procedure 292, the processing of host routing information messages from the joining ordinary-node is commenced, and routing entries associated with the one-hop neighbors of the joining ordinary-node are added to the local routing table. These routing entries, associated with the one-hop neighbors of the joining ordinary-node, are the routes to hosts coupled with these one-hop neighbors or two-hop neighbors of the node. Since the joining ordinary-node is now a one-hop neighbor, packets to hosts coupled therewith and to one-hop node neighbors thereof, are routed via the joining ordinary-node. With reference to Figure 3, routing processor commences the processing of host routing information messages from the joining ordinary-node. Routing processor 156 commences the processing of host routing information messages from the joining ordinary-node and adds routing entries associated with the one one-hop neighbors of the joining ordinary-node are added to the local routing table.

In procedure 294, a routing entry of a route to the joining ordinary-node, is added to the local routing table. With reference to Figure 3, routing processor 156 adds a routing entry of a route to the joining ordinary-node, to the local routing table.

In procedure 296, the processing of host routing information messages, from the joining super-node, is commenced, and routing entries, of routes to hosts coupled with the joining super-node, are add to the local routing table. Since the joining super-node is now a one-hop neighbor, packets to hosts coupled therewith, can be routed via the joining super-node. With reference to Figure 3, routing processor 156 commences processing host routing information messages from the joining super-node. Routing processor 156 further adds the routing entries, of routes to hosts coupled with the joining super-node, to the local routing table.

In procedure 298, the routing entry of the route to the joining super-node, is added to the local routing table and the joining super-node is designated as a gateway. With reference to Figure 3, routing processor 156 adds the routing entry, of the route to the joining super-node to the local routing table.

One-hop neighbors of a super-node may join or leave the network or the one-hop neighborhood of the super-node. Therefore, the routing information and role of the super-node may change when such a change occurs.

Alternatively, the role of a one-hop neighbor of the super-node may change. As mentioned above, this change of role may be considered a combination of two simultaneous events. For example, the event of a one-hope node neighbor, changing its role from a super-node to an ordinary-node is considered as an event of a super-node leaving and the simultaneous event of an ordinary-node joining the one-hop neighborhood.

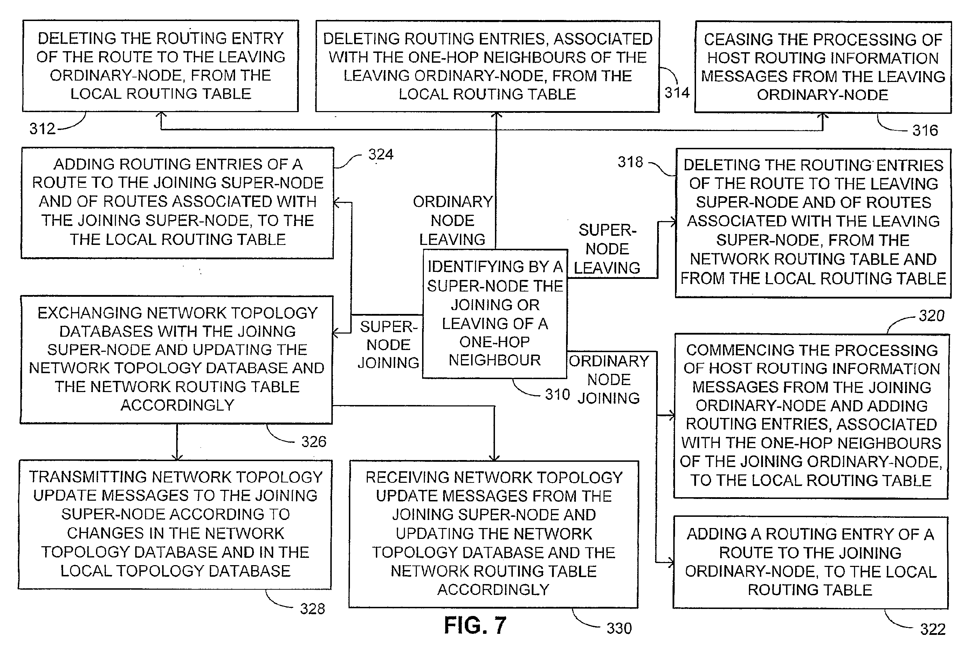

Reference is now made to Figure 7, which is a schematic illustration of a method for updating routing information in a super-node, when a node neighbor joins or leaves the one-hop neighborhood of the super-node, operative in accordance with another embodiment of the disclosed technique. In procedure 310, the joining or leaving of one-hop neighbor, is identified by a super-node. A node is identified as leaving, when hello messages are no longer received within a certain time period. The certain time period may be predetermined or dynamically determined. When a one-hop ordinary-node neighbor leaves the one-hop neighborhood of the super-node, then the method proceeds to procedure 312, 314 and 316. When a one-hop super-node neighbor leaves the one-hop neighborhood of the super-node, then the method proceeds to procedure 318. A node is identified as joining, when the first hello message is received there from. Alternatively, a node is identified as joining when a determined number of hello messages are received there from. When a one-hop ordinary-node neighbor joins the one-hop neighborhood of the super-node, then the method proceeds to procedure 320, 322. When a one-hop super-node neighbor joins the one-hop neighborhood of the super-node, then the method proceeds to procedure 324 and 326. With reference to Figure 3, local topology processor 154 identifies if a one-hop neighbor joined or left the one-hop neighborhood of the super-node.

In procedure 312, the routing entry of the route to the leaving ordinary-node, is deleted from the local routing table. With reference to Figure 3, routing processor 156 deletes the routing entry of the route to the leaving ordinary-node, from the local routing table.

In procedure 314, the routing entries associated with the one-hop neighbors of the leaving ordinary-node, are deleted from the local routing table. These routing entries, associated with the one-hop neighbors of the leaving ordinary-nodes, are the routes to hosts coupled with these one-hop neighbors or two-hop neighbors of the node. With reference to Figure 3, routing processor 156 deletes the routing entries associated with the one-hop neighbors of the leaving ordinary-node, from the local routing table.

In procedure 316, the processing of host routing information messages from the leaving ordinary-node, is ceased. Since the leaving ordinary-node is no longer a one-hop neighbor, packets to hosts coupled therewith (i.e., either directly of via an external router coupling an external network) can no longer be routed via the leaving ordinary-node. With reference to Figure 3, routing processor 156 ceases to process host routing information messages from the leaving ordinary-node In procedure 318, routing entries of the route to the leaving super-node and routes associated with the leaving super-node, are deleted from the network routing table and from the local routing table. The routes, associated with this leaving super-node, are routes to nodes in the network that this leaving super-node serves as a first hop. With reference to Figure 3, routing processor 156 deletes the routing entries of the route to the leaving super-node and routes associated with the leaving super-node from network routing table and from the local routing table.

In procedure 320, the processing of host routing information messages, from the joining ordinary-node, is commenced and routing entries, associated with the one-hop neighbors of the joining ordinary-node, are added to the local routing table. These routing entries, associated with the one-hop neighbor of the joining ordinary-node, are the routes to hosts coupled with the joining ordinary-node. Since the joining ordinary-node is now a one-hop neighbor, packets to hosts coupled therewith, can be routed via the joining ordinary-node. With reference to Figure 3, routing processor 156 commences the processing of host routing information messages from the joining ordinary-node. Routing processor 156 commences the processing of host routing information messages from the joining ordinary-node and adds routing entries associated with the one one-hop neighbors of the joining ordinary-node are added to the local routing table.

In procedure 322, a routing entry of a route to the joining ordinary-node, is added to the local routing table. With reference to Figure 3, routing processor 156 adds a routing entry of a route to the joining ordinary-node, to the local routing table.

In procedure 324, routing entries, of the route to the joining super-node and routes associated with the joining super-node, are added to the local routing table. The routes, associated with this joining super-node, are routes to one-hop neighbors of the joining super-node. With reference to Figure 3, routing processor 156 adds routing entries, of the route to the joining super-node and routes associated with the joining super-node to the local routing table.

In procedure 326, network topology databases are exchanged with the joining super-node and the network topology database and the network routing table is updated accordingly. With reference to Figure 3, network topology processor 152 exchanges network topology databases with one-hop super-node neighbors and routing processor 156 constructs a network routing table. After the completion of procedure 326, the method proceeds to procedure 328 and 330.

In procedure 328, network topology update messages are transmitted to the joining super-node neighbors, according to changes in the network topology database and in the local topology database. This network topology update message is flooded through the backbone. With reference to Figure 3, network topology processor 152 transmits network topology update messages.

In procedure 330, network topology update messages are received from the joining super-node neighbors and the network topology database and the network routing table are updated accordingly. This network topology update message is flooded thorough the backbone. With reference to Figure 3, network topology processor 152 transmits via transmitter 160 network topology update messages.

Reference is now made to Figure 8, which is a schematic illustration of an exemplary network, in accordance with a further embodiment of the disclosed technique generally referenced 400. In network 400 the minimal one-hop local super-node number and the minimal one-hop backbone super-node number are equal to one. Network 400 includes super-nodes 402, 404, 406 and 408 designated by rhombuses, ordinary nodes 410, 412, 414, 416, 418, and 420 designated by circles. Network 400 further includes hosts 422, 426, 430, 432, 434, 438 and 440 designated by triangles and router to external networks 424, 428 and 436 designate by hexagons. Routers 424, 428 and 436 may have other hosts (not shown) coupled therewith. Hosts 422 and router 424 are coupled to super-node 402, constituting a sub-network having a class C subnet address 10.120.20.0 (i.e., in accordance with the IP addressing scheme). The network coupled with router 424 has a subnet mask 130.40.30.0. Hosts 426, 430 and router 428 are coupled to ordinary-node 416 constituting a sub-network having a class C subnet address 10.120.50.0. The network coupled with router 482 has a class C subnet mask 130.40.10.0. Hosts 432 and 434 are coupled to ordinary node 418 constituting a sub-network having a class C subnet address 10.120.40.0. Hosts 438, 440 and router 436 are coupled to ordinary node 420 constituting a sub-network having a class C subnet address 10.120.30.0. The network coupled with router 436 has a class C subnet address 130.40.20.0. The hosts, coupled to nodes 402, 416, 418 and 420, are brought herewith as an example. Other nodes (i.e., ordinary-node or super-node) may have hosts coupled to them. One-hop Super-node neighbors communicate with each other by a dedicated backbone routing link designated by a bold line. Super-node 404 communicates with super-nodes 402, 406, and 408 via dedicated backbone routing links 442, 446 and 444 respectively. Super-node 408 and 406 communicate with each other via dedicated backbone routing link 448. Lines 450 indicate ordinary nodes communicating with one-hop neighbors.

Each node and host in exemplary network 400 is assigned a unique IP address known in the art, as the unique routing identification representation. The address is used to uniquely identify each node in the routing tables stored in each node. For example, super-node 408 is assigned address 100.200.0.4 and ordinary-node 416 is assigned address 100.200.1.3.

Table 1 is an exemplary routing table of ordinary-node 416 in network 400 in accordance with a further embodiment the disclosed technique. It is noted that this table is a "snap-shot" in time of the routing local routing table of node 416. Ordinary-node 416 may randomly or deterministically (e.g., according to the routing load of the super-nodes) sends a packet to any of the one super-nodes neighbors thereof (i.e., a packet may be sent to super-node 406 and a different packet may be sent to super-node 408). Therefore, super-nodes 406 and 408 are indicated as gateways to nodes in the network more than two hops away. The rest of the entries are entries of ordinary-nodes 418 and 420, which are the one and two-hop neighbors of ordinary node 416 and the hosts coupled to ordinary-nodes 418 and 420.

**Table 1**

| **Ordinary-Node 416 Routing Table** | | | | |
|---|---|---|---|---|
| | Destination | Subnet mask | Sending Via | Note |
| .1 | 100.200.0.3 | 255.255.255.255 | 100.200.1.3 | To SN 406 via self |
| .2 | 100.200.0.4 | 255.255.255.255 | 100.200.1.3 | To SN 408 via self |
| .3 | 100.200.0.2 | 255.255.255.255 | 100.200.0.4 | To SN 404 via SN 408 |
| .4 | 100.200.0.2 | 255.255.255.255 | 100.200.0.3 | To SN 404 via SN 406 |
| .5 | 100.200.1.6 | 255.255.255.255 | 100.200.1.3 | To ON 418 via self |
| .6 | 100.200.1.5 | 255.255.255.255 | 100.200.1.6 | To ON 420 via ON 418 |
| .7 | 100.200.1.2 | 255.255.255.255 | 100.200.0.3 | To ON 412 via SN 406 |
| .8 | 100.200.1.1 | 255.255.255.255 | 100.200.0.3 | To ON 414 via SN 406 |
| .9 | 10.120.50.0 | 255.255.255.0 | 10.120.50.1 | To network behind node 416 via self |
| .10 | 130.40.10.0 | 255.255.255.0 | 10.120.50.3 | To network behind router 428 via router 428 |
| .11 | 10.120.40.0 | 255.255.255.0 | 100.200.1.6 | To network behind node 418 via node 418 |
| .12 | 10.120.30.0 | 255.255.255.0 | 100.200.1.6 | To network behind node 420 via node 418 |
| .13 | 0.0.0.0 | 0.0.0.0 | 100.200.0.4 | Packets to the world may pass through SN 408 |
| .14 | 0.0.0.0 | 0.0.0.0 | 100.200.0.3 | Packets to the world may pass through SN 406 |
| ON - Ordinary-Node | | | | |
| SN - Super-Node | | | | |

Table 2 is the routing tables of super-node 404 in exemplary network 400 in accordance with the disclosed technique. The routing tables of super-node 404 include two routing tables. The first routing table is the local routing table. The local routing table includes entries to one-hop neighbors of super-node 404 and to the hosts coupled therewith. The second routing table is the network routing table. The network routing table includes entries to each node and host in the network other then the one-hop neighbors of super-node 404.

**Table 2**

| **Super-Node 404 Routing Tables** | | | | | |
|---|---|---|---|---|---|
| | Destination | Subnet mask | Sending Via | Link Value | Note |
| **Local Routing Table** | | | | | |
| 1. | 100.200.0.1 | 255.255.255.255 | 100.200.0.2 | 1 | To SN 402 via self |
| 2. | 100.200.0.3 | 255.255.255.255 | 100.200.0.2 | 1 | To SN 406 via self |
| 3. | 100.300.0.4 | 255.255.255.255 | 100.200.0.2 | 1 | To SN 408 via self |
| 4. | 100.300.1.2 | 255.255.255.255 | 100.200.0.2 | 1 | To ON 412 via self |
| 5. | 100.200.1.4 | 255.255.255.255 | 100.200.0.2 | 1 | To ON 410 via self |
| 6. | 100.200.1.5 | 255.255.255.255 | 100.200.1.4 | 2 | To ON 420 via ON 410 |

| **Network Routing Table** | | | | | |
|---|---|---|---|---|---|
| 7. | 100.200.1.1 | 255.255.255.255 | 100.200.0.3 | 2 | To ON 414 via SN 406 |
| 8. | 100.200.1.5 | 255.255.255.255 | 100.200.0.4 | 2 | To ON 420 via SN 408 |
| 9. | 100.200.1.6 | 255.255.255.255 | 100.200.0.4 | 2 | To ON 418 via SN 408 |
| 10. | 100.200.1.3 | 255.255.255.255 | 100.200.0.4 | 2 | To ON 416 via SN 408 |
| 11. | 100.200.1.3 | 255.255.255.255 | 100.200.0.3 | 2 | To ON 416 via SN 406 |
| 12. | 10.120.20.0 | 255.255.255.0 | 10.120.20.12 | 2 | To network coupled with SN 402 via SN 402 |
| 13. | 130.40.30.0 | 255.255.255.0 | 100.200.0.1 | 3 | To network coupled with router 424 via SN 402 |
| 14. | 10.120.50.0 | 255.255.255.0 | 100.200.0.3 | 3 | To network coupled with ON 416 via SN 406 |
| 15. | 130.40.10.0 | 255.255.255.0 | 100.200.0.3 | 4 | To network coupled to router 428 via SN 406 |
| 16. | 10.120.50.0 | 255.255.255.0 | 100.200.0.4 | 3 | To network coupled with ON 416 via SN 408 |
| 17. | 130.40.10.0 | 255.255.255.0 | 100.200.0.4 | 4 | To network coupled to router 428 via SN 408 |
| 18. | 10.120.40.0 | 255.255.255.0 | 100.200.0.4 | 3 | To network coupled with ON 418 via SN 408 |
| 19. | 10.120.30.0 | 255.255.255.0 | 100.200.0.4 | 3 | To network coupled with ON 420 via SN 408 |
| 20. | 130.40.20.0 | 255.255.255.0 | 100.200.0.4 | 4 | To network coupled with router 436 via SN 408 |
| ON - Ordinary-Node | | | | | |
| SN - Super-Node | | | | | |

During the transmission of a packet, between the packet source node to the packet destination node, each node determined the next hop in the route to the destination of that packet, according to the pertinent routing table (i.e., local routing table or network routing table). This next hop is referred to herein as the primary next hop.

However, according to one event, the link between the current node (i.e., the last node to receive the packet or the packet source node) and the primary next hop may be inoperative (i.e., either temporarily or permanently). Moreover, according to another event, the primary next hop may be incapable of relaying the packet. If such events occur, the current node forwards the packet to an alternative next hop. This alternative next hop is a node communicating with the original next hop, according to the local topology database of the current node. The alternative next hop node relays the packet to the primary next hop. Alternatively, if there are no one-hop neighbors, communicating with the primary next-hop, the current node forwards the packet to a one-hop super-node neighbor or to a one-hop ordinary-node neighbor not communicating with the primary next hop.

Reference is now made to Figure 9A which is a schematic diagram of a network generally reference 500, operative in accordance with another embodiment of the disclosed technique. Network 500 includes super-nodes 502, 504 and 508, and ordinary-node 506. In network 500 the minimal one-hop local super-node number and the minimal one-hop backbone super-node number are equal to two. Each of lines 510 represents a communication link between an ordinary-node and a one-hop neighbor of the ordinary-node. Bold line 512 represents a dedicated backbone routing link between super-node 502 and super-node 504. Bold line 514 represents a dedicated backbone routing link between super-node 502 and super-node 508. Bold line 516 represents a dedicated backbone routing link between super-node 508 and super-node 504.

In the event that super-node 502 needs to forward a packet to super-node 504 (i.e., super-node 504 is the original next hop), and the dedicated backbone routing link 512 is inoperative, then super-node 502 forwards the packet to ordinary-node 506, or to any other ordinary-node communicating with super-node 504, which in turn forwards the packet to super-node 504.

Reference is now made to Figure 9B which is a schematic diagram of a network generally reference 520, operative in accordance with another embodiment of the disclosed technique. Network 520 includes super-nodes 524, 528, 530, 532, 534 and 536. Network 520 further includes ordinary-nodes 522 and 526. In network 520 the minimal one-hop local super-node number and the minimal one-hop backbone super-node number are equal to two. Each of lines 552 indicates a local communication link between ordinary-node and a one-hop neighbor of the ordinary-node. Bold line 538, 540, 542, 544, 546, 548 and 550 represents the dedicated backbone routing link between super-nodes 536 and 524, 536 and 534, 534 and 524, 524 and 528, 528 and 530, 528 and 532 and 530 and 532 respectively.

In the event that ordinary-node 522 needs to forward a packet, destined to a node at most two hops away, to super-node 524 (i.e., super-node 524 is the primary next hop), and the link between ordinary-node 522 and super-node 524 is inoperative, ordinary-node 522 forwards the packet to ordinary-node 526, or to any other ordinary-node communicating with super-node 524. In turn, ordinary-node 526 forwards the packet to super-node 524.

In the event that ordinary-node 522 needs to forward a packet, destined to a node more than two hops away, to super-node 524 (i.e., super-node 524 is the primary next hop), and the link between ordinary-node 522 and super-node 524 is inoperative, ordinary-node 522 forwards the packet to super-node 528, or to any other super-node communicating with super-node 524. In turn, super-node 528 forwards the packet to super-node 524.

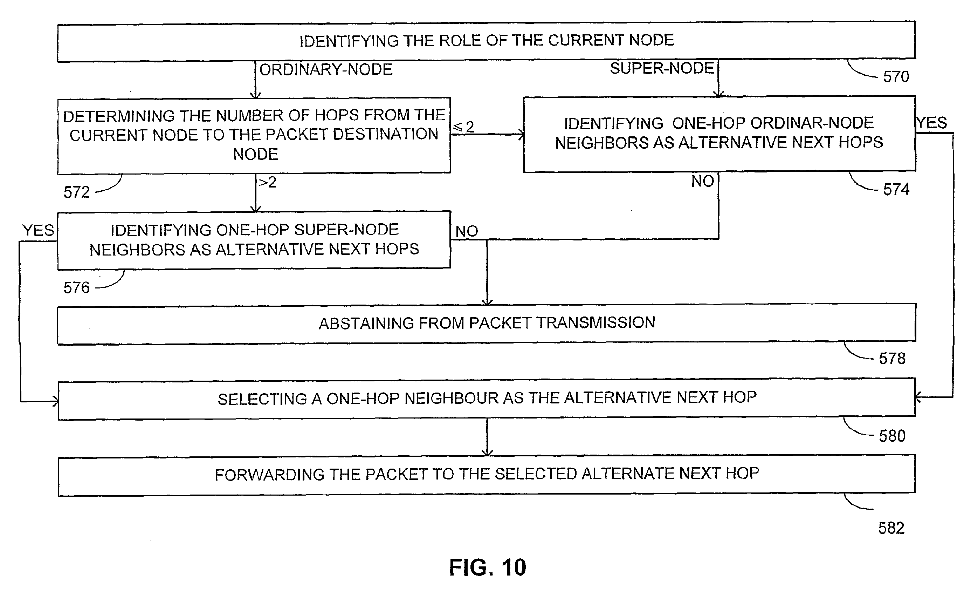

Reference is now made to Figure 10, which is a schematic illustration of a method for selecting the alternative next hop of a node, operative in accordance with a further embodiment of the disclosed technique. In procedure 570 the role of the current node is identified. When the role of the current node is ordinary-node, then, the method proceeds to procedure 572. When the role of the current node is super-node, then, the method proceeds to procedure 574. With reference to Figure 3, local topology processor 154 identifies the own role of the node.

In procedure 572 the number of hops from the current node to the packet destination node is determined. When the packet destination node is at most two hops away from the current node (i.e., the destination node is in the two hop neighborhood of the current node), then, the method proceeds to procedure 574. Otherwise, the method proceeds to procedure 576. With reference to Figure 3, local topology processor 154 determines if the packet destination node is in the local neighborhood of the current node.

In procedure 574 one-hop ordinary-node neighbors are identified as alternative next hops. When one-hop ordinary-node neighbors are identified as alternative next hops, then, the method proceeds to procedure 580. When one-hop ordinary-node neighbors are not identified as alternative next hops, then, the method proceeds to procedure 578. With reference to Figure 3, local topology processor 154 identifies one-hop ordinary-node neighbors as alternative next hops.

In procedure 576 one-hop super-node neighbors are identified as alternative next hops. When one-hop super-node neighbors are identified as alternative next hops, then, the method proceeds to procedure 580. When one-hop super-node neighbors are not identified as alternative next hops, then, the method proceeds to procedure 578. With reference to Figure 3, local topology processor 154 identifies one-hop super-node neighbors as alternative next hops.

In procedure 578, the packet transmission is abstained. With Reference to Figure 3, routing processor 156 abstains from transmitting the packet.

In procedure 580, a one-hop neighbor is selected as the alternative next hop. With reference to Figure 3, local topology processor 154 selects the alternative next hop. After the completion of procedure 580, the method proceeds to procedure 582.

In procedure 582, the packet is forwarded to the selected alternative next hop, for further forwarding. With reference to Figure 3, routing processor 154 forwards the packet to the selected alternative next hop via transmitter 160.

As mentioned above, super-nodes synchronize their network topology databases, and maintain this synchronization, by flooding the network with network topology update messages. These network topology update messages inform of changes in the topology of the one-hop neighborhood of the super-node from which this message originated. However, when the network is very large, a network topology update message may take a long period of time to propagate through all the super-node backbone. Furthermore, since the number of these network topology update messages maybe very large, the bandwidth required to handle all these network topology update messages, by a single super-node, may be large as well.

Therefore, according to another embodiment of the disclosed technique, a super-node maintains a sub-network topology database. This sub-network topology database includes information regarding the topology of each of a limited number of super-node neighbors. The number of super-node neighbors is limited by a sub-network limiting criterion. This sub-network limiting criterion may be, for example, the hop number of super-node neighbors from the pertinent super-node. The sub-network limiting criterion may further be the distance form the pertinent super-node. Furthermore, the network topology update messages propagate only those limited number super-node neighbors. As a consequence, each super-node maintains a different topology database (i.e., each super-node "sees" a different sub-network). Packets, destined to nodes or hosts which are not a part of the pertinent sub-network, are routed through one, of at least one specially designated super-node connected to a gateway, storing topology information regarding the entire network. Alternatively, each sub-network may have at least one selected super-node storing topology information regarding the entire network.

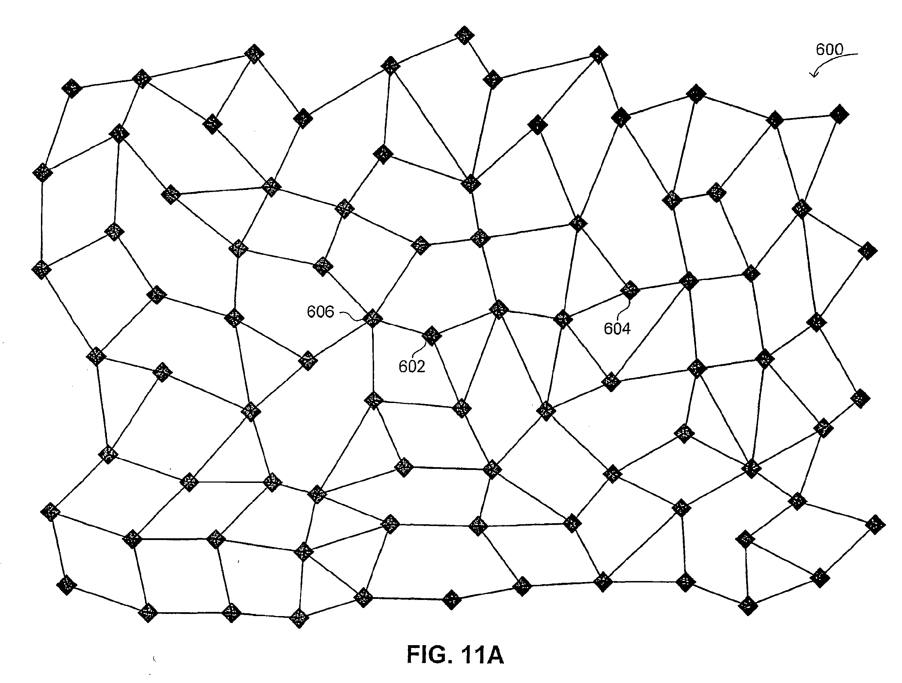

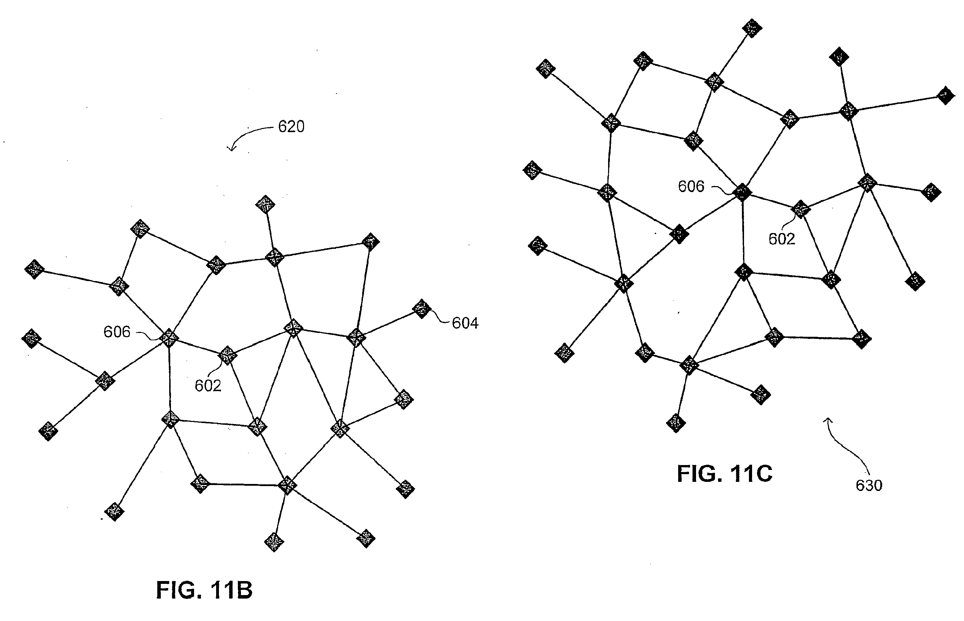

Reference is now made to Figures 11A, 11B and 11C. Figure 11A is a schematic illustration of an exemplary super-node backbone of a network generally reference 600, operative in accordance with another embodiment of the disclosed technique. In network 600, each super-node maintains a sub-network topology database regarding the local topology of each of three hop super-neighbors of the pertinent super-node. Figure 11B is a schematic illustration of the super-node backbone of the sub-network, generally reference 620, stored in super-node 602, operative in accordance with another embodiment of the disclosed technique. Figure 11C is a schematic illustration of the super-node backbone of the sub-network, generally reference 630, stored in super-node 606, operative in accordance with another embodiment of the disclosed technique. Since super-node 604 is a four hop neighbor of super-node 606, super-node 606 does not store the topology information regarding super-node 604. When super-node 606 needs to route a packet destined to super-node 604, or to any other node or host that are not stored therein, super-node 606 routes the message to one of at least one specially designated super-node, storing topology information regarding the entire network.

It will be appreciated by persons skilled in the art that the disclosed technique is not limited to what has been particularly shown and described hereinabove. Rather the scope of the disclosed technique is defined only by the claims, which follow.

## Claims

1. A cluster-less wireless ad-hoc network comprising:
a plurality of nodes, each of said nodes has a dynamically determined role, a portion of said nodes are designated with the role of super-node and the remaining of said nodes are designated with the role of ordinary-nodes, said super-nodes form the routing backbone of said network, each of said nodes including:
a transmitter (160) for transmitting messages over a wireless medium;
a receiver (158) for receiving messages over a wireless medium;
a local topology processor (154), coupled with said transmitter and with said receiver, maintaining a local topology database, said local topology processor further determining the role of said node.
a network topology processor (152), operative when the role of said node is super-node, coupled with said transmitter, with said receiver and with said local topology processor, for maintaining a network topology database, and for establishing and terminating a dedicated backbone routing link with each one-hop super-node neighbor; and
a routing processor (156), coupled with said transmitter, with said receiver, with said local topology processor and with said network topology processor, for maintaining a local routing table according to said local topology database, and constructing a network routing table, according to said network topology database when said node is a super-node,
wherein, each ordinary-node is adapted to attempt to have at least a minimal one-hop local super-node number of one-hop super-node neighbors and each super-node attempts to have at least a minimal one-hop backbone super-node number of one-hop super-node neighbors, and
wherein, at least some of said ordinary-nodes have at least two one-hop super-node neighbors.

2. The network according to claim 1, wherein each of said nodes is adapted to provide routing services to at least one host coupled therewith.

3. The network according to claim 2, wherein each of said nodes may further provide routing services to external routers coupled therewith, said external routers couple other networks with said node.

4. The network according to claim 1, wherein said local topology database is adapted to include the identification representation of said node, the role of said node, said identification representation of neighbor nodes and the role of each of said neighbor nodes.

5. The network according to claim 4, wherein each of said nodes is adapted to transmit a node status message, said node status message including at least said identification representation of the transmitting node, the role of said transmitting node, said identification representation of at least one-hop neighbors of said transmitting node and the role of each of said at least one-hop neighbors of said transmitting node, said local topology database is updated with the information included in received ones of said node status messages.

6. The network according to claim 5, wherein in each of said nodes said routing processor is adapted to construct a local routing table according to said local topology database for use by said nodes when transmitting a packet to at least one of the neighbor nodes thereof.

7. The network according to claim 6, wherein said neighbor nodes are limited by a neighbor limiting criterion.

8. The network according to claim 6, wherein each node, designated with the role of ordinary-node transmits packets to nodes, not included in said local routing table, via at least one one-hop super-node neighbor.

9. The network according to claim 8, wherein said one-hop super-node neighbor may change for each transmitted packet.

10. The network according to claim 1, wherein said network topology database is adapted to include a sub-network of nodes, said sub-network of nodes is a limited number of said nodes in said network.

11. The network according to claim 10, wherein said network topology database is further is adapted to include an entry to at least one host coupled with one of said nodes in said sub-network.

12. The network according to claim 10, wherein the number of nodes in said sub-network of nodes is limited by a sub-network limiting criterion.

13. The network according to claim 12, wherein said sub-network limiting criterion is the hop number of said super-node neighbors of each of said nodes designated with the role of super-node.

14. The network according to claim 12, wherein said sub-network limiting criterion is the distance of said limited number of super-nodes from each of said nodes designated with the role of super-node.

15. The network according to claim 10, wherein, for each of said nodes, designated with the role of super-node, said network topology processor is adapted to construct a network routing table, said network routing table is adapted to include an entry for each of said nodes stored in said network topology database.

16. The network according to claim 15, wherein each of said nodes with said designated role of super-node, is adapted to transmit packets destined to non-neighbor nodes according to said network routing table, and
a non-neighbor node is a node designated with the role of super-node, more than one-hop from said packet transmitting node, and
wherein said non-neighbor is further a node, designated with the role of ordinary-node, more than a neighbor limiting criterion from said packet transmitting node.

17. The network according to claim 16, wherein said neighbor limiting criterion is the hop number of said neighbor nodes from said transmitting node.

18. The network according to claim 16, wherein said neighbor limiting criterion is the distance of said neighbor nodes from said transmitting node.

19. The network according to claim 1, wherein for each of said nodes, said minimal number of one-hop super-node neighbors, when said node is designated with the role of ordinary node, is different from said minimal number of super-node neighbors when said node is designated with the role of super-node.

## Patentansprüche

1. Clusterloses drahtloses Adhoc-Netzwerk, umfassend:
mehrere Knoten, wobei jeder der Knoten eine dynamisch bestimmte Rolle spielt, wobei einem Teil der Knoten die Rolle von Superknoten zugewiesen ist und den restlichen Knoten die Rolle gewöhnlicher Knoten zugewiesen ist, wobei die Superknoten das Leitungs-Rückgrat des Netzwerks bilden, wobei jeder der Knoten das Folgende aufweist:
einen Sender (160) zum Senden von Meldungen über ein drahtloses Medium;
einen Empfänger (158) zum Empfangen von Meldungen über ein drahtloses Medium;
einen lokalen Topologieprozessor (154), der mit dem Sender und dem Empfänger verbunden ist und eine lokale Topologiedatenbank unterhält, wobei der lokale Topologieprozessor ferner die Rolle des Knotens bestimmt;
einen Netzwerk-Topologieprozessor (152), der operativ ist, wenn die Rolle des Knotens die eines Superknotens ist, und der mit dem Sender, mit dem Empfänger und mit dem lokalen Topologieprozessor verbunden ist, zum Unterhalten einer Netzwerk-Topologiedantenbank und zum Einrichten und Beenden einer dedizierten Rückgrat-Leitungsverbindung mit jedem Ein-Funkfeld-Superknotennachbarn und
einen Leitungsprozessor (156), der mit dem Sender, mit dem Empfänger, mit dem lokalen Topologieprozessor und mit dem Netzwerk-Topologieprozessor verbunden ist, zum Unterhalten einer lokalen Leitungstabelle gemäß der lokalen Topologiedatenbank und Konstruieren einer Netzwerk-Leitungstabelle gemäß der Netzwerk-Topologiedatenbank, wenn der Knoten ein Superknoten ist,
wobei jeder gewöhnliche Knoten dafür geeignet ist zu versuchen, zumindest eine minimale Ein-Funkfeld-Lokal-Superknoten-Anzahl von Ein-Funkfeld-Superknotennachbarn aufzuweisen, und jeder Superknoten versucht, zumindest eine minimale Ein-Funkfeld-Rückgrat-Superknoten-Anzahl von Ein-Funkfeld-Superknotennachbarn aufzuweisen, und
wobei mindestens einige der gewöhnlichen Knoten mindestens zwei Ein-Funkfeld-Superknotennachbarn aufweisen.

2. Netzwerk nach Anspruch 1, wobei jeder der Knoten dafür geeignet ist, mindestens einem mit ihm verbundenen Host Leitungsdienste bereitzustellen.

3. Netzwerk nach Anspruch 2, wobei jeder der Knoten ferner dafür geeignet ist, mit ihm verbundenen externen Routern Leitungsdienste bereitzustellen, wobei die externen Router andere Netzwerke mit dem Knoten verbinden.

4. Netzwerk nach Anspruch 1, wobei die lokale Topologiedatenbank dafür geeignet ist, die Kennung des Knotens, die Rolle des Knotens, die Kennung von Nachbarknoten und die Rolle jedes der Nachbarknoten zu umfassen.

5. Netzwerk nach Anspruch 4, wobei jeder der Knoten dafür geeignet ist, eine Knotenstatusmeldung zu senden, wobei die Knotenstatusmeldung mindestens die Kennung des sendenden Knotens, die Rolle des sendenden Knotens, die Kennung von zumindest Ein-Funkfeld-Nachbarn des sendenden Knotens und die Rolle jedes der zumindest Ein-Funkfeld-Nachbarn des sendenden Knotens umfasst, wobei die lokale Topologiedatenbank mit den Informationen aktualisiert wird, die in empfangenen Knotenstatusmeldungen enthalten sind.

6. Netzwerk nach Anspruch 5, wobei in jedem der Knoten der Leitungsprozessor dafür geeignet ist, eine lokale Leitungstabelle gemäß der lokalen Topologiedatenbank zur Verwendung durch die Knoten zu konstruieren, wenn sie ein Paket an mindestens einen ihrer Nachbarknoten senden.

7. Netzwerk nach Anspruch 6, wobei die Nachbarknoten durch ein Nachbarknotenkriterium begrenzt sind.

8. Netzwerk nach Anspruch 6, wobei jeder Knoten, dem die Rolle eines gewöhnlichen Knotens zugewiesen ist, an Knoten, die nicht in der lokalen Leitungstabelle enthalten sind, Pakete über mindestens einen Ein-Funkfeld-Superknotennachbarn sendet.

9. Netzwerk nach Anspruch 8, wobei der Ein-Funkfeld-Superknotennachbar für jedes gesendete Paket auswechselbar ist.

10. Netzwerk nach Anspruch 1, wobei die Netzwerk-Topologiedatenbank dafür geeignet ist, ein Teilnetzwerk von Knoten zu umfassen, wobei es sich bei dem Teilnetzwerk von Knoten um eine begrenzte Anzahl der Knoten in dem Netzwerk handelt.

11. Netzwerk nach Anspruch 10, wobei die Netzwerk-Topologiedatenbank ferner dafür geeignet ist, einen Eintrag für mindestens einen Host zu umfassen, der mit einem der Knoten in dem Teilnetzwerk verbunden ist.

12. Netzwerk nach Anspruch 10, wobei die Anzahl der Knoten in dem Teilnetzwerk von Knoten durch ein Teilnetzwerk-Begrenzungskriterium begrenzt ist.

13. Netzwerk nach Anspruch 12, wobei das Teilnetzwerk-Begrenzungskriterium die Funkfeldanzahl der Superknotennachbarn jedes der Knoten ist, denen die Rolle eines Superknotens zugewiesen ist.

14. Netzwerk nach Anspruch 12, wobei das Teilnetzwerk-Begrenzungskriterium die Entfernung der begrenzten Anzahl an Superknoten von jedem der Knoten ist, denen die Rolle eines Superknotens zugewiesen ist.

15. Netzwerk nach Anspruch 10, wobei für jeden der Knoten, denen die Rolle eines Superknotens zugewiesen ist, der Netzwerk-Topologieprozessor dafür geeignet ist, eine Netzwerk-Leitungstabelle zu konstruieren, wobei die Netzwerk-Leitungstabelle dafür geeignet ist, einen Eintrag für jeden der Knoten zu umfassen, die in der Netzwerk-Topologiedatenbank gespeichert sind.

16. Netzwerk nach Anspruch 15, wobei jeder der Knoten mit der zugewiesenen Rolle eines Superknotens dafür geeignet ist, Pakete, die an Nicht-Nachbarknoten adressiert sind, gemäß der Netzwerk-Leitungstabelle zu senden, und
ein Nicht-Nachbarknoten ein Knoten ist, dem die Rolle eines Superknotens zugewiesen ist und der mehr als ein Funkfeld von dem das Paket sendenden Knoten entfernt ist.

17. Netzwerk nach Anspruch 16, wobei das nachbarbegrenzende Kriterium die Funkfeldanzahl der Entfernung der Nachbarknoten von dem sendenden Knoten ist.

18. Netzwerk nach Anspruch 16, wobei das nachbarbegrenzende Kriterium die Entfernung der Nachbarknoten von dem sendenden Knoten ist.

19. Netzwerk nach Anspruch 1, wobei sich für jeden der Knoten die minimale Anzahl an Ein-Funkfeld-Superknotennachbarn, wenn dem Knoten die Rolle eines gewöhnlichen Knotens zugewiesen ist, von der minimalen Anzahl an Superknotennachbarn, wenn dem Knoten die Rolle eines Superknotens zugewiesen ist, unterscheidet.

## Revendications

1. Réseau ad hoc sans fil et sans grappe, comprenant :
une pluralité de noeuds, chacun desdits noeuds ayant un rôle déterminé dynamiquement, une portion desdits noeuds étant désignés avec le rôle de super-noeuds et le reste desdits noeuds étant désignés avec le rôle de noeuds ordinaires, lesdits super-noeuds constituant la dorsale de routage dudit réseau, chacun desdits noeuds comprenant :
un émetteur (160) pour transmettre des messages sur un support sans fil ;
un récepteur (158) pour recevoir des messages sur un support sans fil ;
un processeur de topologie locale (154), couplé au dit émetteur et au dit récepteur, maintenant une base de données de topologie locale, ledit processeur de topologie locale déterminant en outre le rôle dudit noeud ;
un processeur de topologie de réseau (152), opérationnel lorsque le rôle dudit noeud est super-noeud, couplé au dit émetteur, au dit récepteur et au dit processeur de topologie locale, pour maintenir une base de données de topologie de réseau, et pour établir et maintenir une liaison de routage de dorsale dédiée avec chaque voisin de super-noeud à un saut ; et
un processeur de routage (156), couplé au dit émetteur, au dit récepteur, au dit processeur de topologie locale et au dit processeur de topologie de réseau, pour maintenir une table de routage local en fonction de ladite base de données de topologie locale, et pour construire une table de routage de réseau, en fonction de ladite base de données de topologie de réseau lorsque ledit noeud est un super-noeud,
dans lequel chaque noeud ordinaire est apte à essayer d'avoir au moins un nombre de super-noeuds locaux à un saut minimal de voisins de super-noeud à un saut et chaque super-noeud essaye d'avoir un nombre de super-noeuds de dorsale à un saut minimal de voisins de super-noeud à un saut, et
dans lequel au moins certains desdits noeuds ordinaires ont au moins deux voisins de super-noeud à un saut.

2. Réseau selon la revendication 1, dans lequel chacun desdits noeuds est apte à fournir des services de routage vers au moins un hôte couplé à celui-ci.

3. Réseau selon la revendication 2, dans lequel chacun desdits noeuds peut en outre fournir des services de routage à des routeurs externes couplés à celui-ci, lesdits routeurs externes couplant d'autres réseaux au dit noeud.

4. Réseau selon la revendication 1, dans lequel ladite base de données de topologie locale est apte à comprendre la représentation d'identification dudit noeud, le rôle dudit noeud, ladite représentation d'identification de noeuds voisins et le rôle de chacun desdits noeuds voisins.

5. Réseau selon la revendication 4, dans lequel chacun desdits noeuds est apte à transmettre un message de statut de noeud, ledit message de statut de noeud comprenant au moins ladite représentation d'identification du noeud de transmission, le rôle dudit noeud de transmission, ladite représentation d'identification d'au moins des voisins à un saut dudit noeud de transmission et le rôle de chacun desdits au moins des voisins à un saut dudit noeud de transmission, ladite base de données de topologie locale étant mise à jour avec les informations incluses dans lesdits messages de statut de noeud reçus.

6. Réseau selon la revendication 5, dans lequel, dans chacun desdits noeuds, ledit processeur de routage est apte à construire une table de routage local en fonction de ladite base de données de topologie locale en vue de son utilisation par lesdits noeuds lors de la transmission d'un paquet à au moins l'un des noeuds voisins de celui-ci.

7. Réseau selon la revendication 6, dans lequel lesdits noeuds voisins sont limités par un critère de limitation de voisin.

8. Réseau selon la revendication 6, dans lequel chaque noeud désigné avec le rôle de noeud ordinaire transmet des paquets à des noeuds qui ne sont pas inclus dans ladite table de routage local par l'intermédiaire d'au moins un voisin de super-noeud à un saut.

9. Réseau selon la revendication 8, dans lequel ledit voisin de super-noeud à un saut peut changer pour chaque paquet transmis.

10. Réseau selon la revendication 1, dans lequel ladite base de données de topologie de réseau est apte à comprendre un sous-réseau de noeuds, ledit sous-réseau de noeuds étant un nombre limité desdits noeuds dans ledit réseau.

11. Réseau selon la revendication 10, dans lequel ladite base de données de topologie de réseau est en outre apte à comprendre une entrée dans au moins un hôte couplé à l'un desdits noeuds dans ledit sous-réseau.

12. Réseau selon la revendication 10, dans lequel le nombre de noeuds dans ledit sous-réseau de noeuds est limité par un critère de limitation de sous-réseau.

13. Réseau selon la revendication 12, dans lequel ledit critère de limitation de sous-réseau est le nombre de sauts desdits voisins de super-noeud de chacun desdits noeuds désignés avec le rôle de super-noeud.

14. Réseau selon la revendication 12, dans lequel ledit critère de limitation de sous-réseau est la distance dudit nombre limité de super-noeuds à partir de chacun desdits noeuds désignés avec le rôle de super-noeud.

15. Réseau selon la revendication 10, dans lequel, pour chacun desdits noeuds, désigné avec le rôle de super-noeud, ledit processeur de topologie de réseau est apte à construire une table de routage de réseau, ladite table de routage de réseau étant apte à comprendre une entrée pour chacun desdits noeuds stockés dans ladite base de données de topologie de réseau.

16. Réseau selon la revendication 15, dans lequel chacun desdits noeuds avec ledit rôle désigné de super-noeud est apte à transmettre des paquets destinés à des noeuds non voisins en fonction de ladite table de routage de réseau, et
un noeud non voisin est un noeud désigné avec le rôle de super-noeud à plus d'un saut dudit noeud de transmission de paquet, et
dans lequel ledit non voisin est en outre un noeud désigné avec le rôle de noeud ordinaire à plus d'un critère de limitation de voisin dudit noeud de transmission de paquet.

17. Réseau selon la revendication 16, dans lequel ledit critère de limitation de voisin est le nombre de sauts desdits noeuds voisins à partir dudit noeud de transmission.

18. Réseau selon la revendication 16, dans lequel ledit critère de limitation de voisin est la distance desdits noeuds voisins à partir dudit noeud de transmission.

19. Réseau selon la revendication 1, dans lequel, pour chacun desdits noeuds, ledit nombre minimal de voisins de super-noeud à un saut, lorsque ledit noeud est désigné avec le rôle de noeud ordinaire, est différent dudit nombre minimal de voisins de super-noeud lorsque ledit noeud est désigné avec le rôle de super-noeud.
